(19) Europäisches Patentamt
European Patent Office
Office européen des brevets

(11) EP 4 446 380 A2

(12) EUROPEAN PATENT APPLICATION

(43) Date of publication:
**16.10.2024 Bulletin 2024/42**

(21) Application number: **24196787.6**

(22) Date of filing: **30.06.2021**

(51) International Patent Classification (IPC):
***C08L 23/26*** *(2006.01)*

(52) Cooperative Patent Classification (CPC):
(C-Sets available)
**C08F 8/42; C08F 8/12; C08L 23/26** (Cont.)

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(62) Document number(s) of the earlier application(s) in accordance with Art. 76 EPC:
**21947498.8 / 4 363 459**

(71) Applicant: **Dow Global Technologies LLC**
**Midland, MI 48674 (US)**

(72) Inventors:
- **HE, Chao**
  **Shanghai, 201203 (CN)**
- **CHEN, Hongyu**
  **Shanghai, 201203 (CN)**
- **MA, Wanfu**
  **Shanghai, 201203 (CN)**
- **OUYANG, Wuye**
  **Shanghai, 201203 (CN)**
- **VAN DUN, Jozef J.I.**
  **8810 Horgen (CH)**
- **MCLENNAGHAN, Allan Walter**
  **8810 Horgen (CH)**

(74) Representative: **Boult Wade Tennant LLP**
**Salisbury Square House**
**8 Salisbury Square**
**London EC4Y 8AP (GB)**

Remarks:
This application was filed on 27-08-2024 as a divisional application to the application mentioned under INID code 62.

# (54) CURE OF ANHYDRIDE FUNCTIONALIZED POLYMERS WITH EPOXY-SILANES

(57) A process to form a composition comprising a crosslinked olefin-based polymer derived from an "anhydride-functionalized olefin-based polymer," said process comprising at least the following steps A) and B):
A) mixing together at least the following *components a* and *b* to form a first composition:
*a)* the "anhydride-functionalized olefin-based polymer," and
*b)* at least one epoxy-silane compound;

B) exposing the first composition to moisture to form the crosslinked olefin-based polymer. Also, related first compositions and crosslinked compositions.

EP 4 446 380 A2

(52) Cooperative Patent Classification (CPC): (Cont.)

C-Sets
**C08F 8/42, C08F 8/12, C08F 8/46, C08F 110/02;**
**C08L 23/26, C08L 91/00, C08K 5/5435**

**Description**

BACKGROUND OF THE INVENTION

Thermoplastics usually have to be cured before they can be successfully used in applications needing high temperature resistance, since such polymers will melt when the temperature is higher than their melting temperature. Many curing chemistries for polymers were developed in previous decades, such as sulfur curing, peroxide curing, moisture curing. However, these curing chemistries may suffer from premature crosslinking during the preparation of the polymer formulation and/or during the processing of the polymer formulation. For example, in an extrusion process, the extrusion temperature cannot be too high, and the residence time cannot be too long, in order to avoid the early stage curing (scorch), in the extrusion of a thermoplastic, crosslinked using sulfur, peroxide, or moisture. The polymer formulations containing these curing agents are typically not stable at high temperatures for the time needed to complete the process at hand. Therefore, there is a need for curing processes, and related formulations, which have wide processing windows (long time operation window at high temperature).

Also, in hot melt adhesives (HMA), there is a need for polymer formulations of high heat resistance to withstand high service temperatures. The incumbent curing chemistry is POLYURETHANE REACTIVE (PUR) that uses NCO chemistry. However, the toxicity of the NCO increases its exposure risk to workers, and the high reactivity of the NCO results in premature curing. Thus, there is a need to replace PUR with more environmentally friendly polymer formulations that provide better controlled of the curing process.

U.S. Patent 5,210,150 discloses moisture-curable, melt-processible adhesives obtained by reacting certain ethylene copolymers containing an n-alkyl acrylate and a carefully limited amount of a carboxylic acid, with a stoichiometric amount of an epoxy-silane (see abstract). However, as shown in the data of the present invention (see Experimental section), acids tend to readily react with epoxy, and catalyze the condensation of silane to form crosslinking in the polymer system, especially at high temperature.

Additional curable polymer formulations are disclosed in the following references: U.S. Patent 8399571, U.S. Patent 8569417 and U.S. Publication 2020/0216730. However, as discussed above, there remains a need for curing processes, and related formulations, which have wide processing windows (long time operation window at high temperature), and a need for more eco-friendly polymer formulations that provide for a better controlled of the curing process. These needs have been met by the following invention.

SUMMARY OF THE INVENTION

In a first aspect, a process to form a composition comprising a crosslinked olefin-based polymer derived from an "anhydride-functionalized olefin-based polymer," said process comprising at least the following steps A) and B):

A) mixing together at least the following *components a* and *b* to form a first composition:

*a)* the "anhydride-functionalized olefin-based polymer," and
*b)* at least one epoxy-silane compound;

B) exposing the first composition to moisture to form the crosslinked olefin-based polymer.

In a second aspect, a first composition comprising at least the following *components a* and *b:*

*a)* an "anhydride-functionalized olefin-based polymer;"
*b)* at least one epoxy-silane compound.

In a third aspect, a crosslinked composition formed from a first composition comprising at least the following *components a* and *b:*

*a)* an "anhydride-functionalized olefin-based polymer;"
*b)* at least one epoxy-silane compound.

In a fourth aspect, a crosslinked composition comprising at least one of the following structure CL1, CL2, CL3 or any combination thereof:

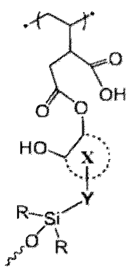 CL1), 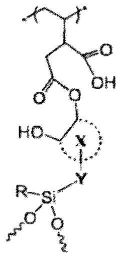 CL2), 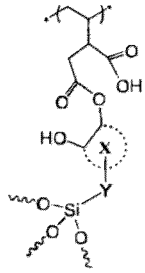 CL3);

and wherein, independently, for each of CL1), CL2), CL3),

each 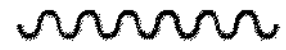 independently represents a portion of another polymer chain of the crosslinked composition;
each * independently represents a portion of the remaining polymer chain bonded to the respective -CH2-CHZ-group noted above, where Z is the respective pendant crosslinked site noted above;
X is the remaining portion of a C3 to C8 ring structure, which contains a carbon atom that is bonded to Y, <u>or</u> X is not present, and Y is bonded to the terminal carbon atom of a "-CH(OH)-$CH_2$-O-" bridge;
Y is independently a hydrocarbylene group or a heterohydrocarbylene group;
each R is independently an OH group, an alkoxy group or an alkyl group.

BRIEF DESCRIPTION OF THE DRAWINGS

Figure 1 is an FTIR profile of "AFFINITY GA 1000R Acid."
Figure 2 is an FTIR profile of "AFFINITY GA 1000R Anhydride."
Figure 3 is an FTIR profile of a first composition just after preparation.
Figure 4 is an FTIR profile of a crosslinked composition formed from the first composition of Figure 3.

DETAILED DRESCRIPTION OF THE INVENTION

New compositions, and crosslinking processes using the same, have been discovered, which provide low viscosity formulations with good thermal stability, and provide excellent high temperature operation windows (for example, viscosity < 20,000 mPa·s or < 15,000 mPa·s, after 3 hours at 177°C), and high Shear Adhesion Failure Temperature (SAFT) > 125°C or > 150°C after curing for 7 days at 85°C/85%RH, in air. In particular, high temperature resistant, hot melt adhesives (HMAs) have been discovered, along with the cure processes for the same (see for example, Scheme 1 below).

It has been unexpectedly discovered that when an epoxy-silane is mixed with an anhydride functionalized polymer, at high temperature, the anhydride form is highly favored over the diacid form, and the anhydride does not react with epoxy-silane to any significant extent. As such, the viscosity of the polymer composition is stable for a long time at high temperature. After the composition (physical blend) is prepared, it can be moisture cured in a controlled manner. It was unexpectedly discovered that, in the presence of moisture, the anhydride will convert to a di-acid form, and one acid group will react with epoxy to form the chemical bond between polymer and epoxy-silane, the other acid group will work as an *in-situ* catalyst, to catalyze the hydrolysis/condensation reactions of silane to form a crosslinking site. Moreover, some moisture curing catalysts, such as dibutyltin dilaurate, may be added to improve cure. An acid and epoxy reaction catalyst, such as diisopropyl salicylic chromium, may also be added to the composition to improve the curing performance.

As discussed above, in a first aspect, a process to form a composition comprising a crosslinked olefin-based polymer derived from an "anhydride-functionalized olefin-based polymer," is provided, and said process comprising at least the following steps A) and B), as discussed above. In a second aspect, first composition comprising at least the following *components a* and *b,* as discussed above. In a third aspect, a crosslinked composition formed from a first composition comprising at least the following *components a* and *b,* as discussed above. In a fourth aspect, a crosslinked composition comprising at least one of the following structure CL1, CL2, CL3 or any combination thereof, as discussed above.

An inventive process may comprise a combination of two or more embodiments, as described herein. An inventive composition may comprise a combination of two or more embodiments, as described herein. Each *component a)* and *b)* may, independently, comprise a combination of two or more embodiments, as described herein.

The following embodiments apply to the first, second, third and fourth aspects of the invention, unless otherwise noted.

In one embodiment, or a combination of two or more embodiments, each described herein, for the first aspect, step A takes place at a temperature ≥ 120°C, or ≥ 130°C, or ≥ 140°C, or ≥ 150°C, or ≥ 160°C, or ≥ 165°C, or ≥ 170°C, or ≥ 175°C, or ≥ 180°C, and/or ≤ 220°C, or ≤ 215°C, or ≤ 210°C, or ≤ 205°C, or ≤ 200°C, or ≤ 195°C, or ≤ 190°C.

In one embodiment, or a combination of two or more embodiments, each described herein, the epoxy-silane compound is selected from structures e1) or e2) below:

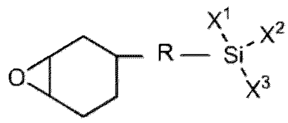 e1),

where R is an alkylene group or a CHaO-alkylene group, X1, X2 and X3 are each independently an alkoxy group or an alkyl group, and at least one of X1, X2 or X3 is an alkoxy group; or

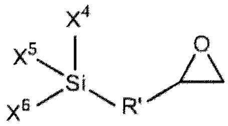 e2),

where R' is an alkylene group or a CHaO-alkylene group, X4, X5 and X6 are each independently an alkoxy group or an alkyl group, and at least one of X4, X5 or X6 is an alkoxy group. Note, as used herein, in reference to the noted epoxy-silane compounds, X1 = $X^1$, X2 = $X^2$, X3 = $X^3$, and so forth.

In one embodiment, or a combination of two or more embodiments, each described herein, the epoxy-silane compound is selected from structures e11), e12), e21), e22), e23), e24), e25), e26), e27) or e28) below:

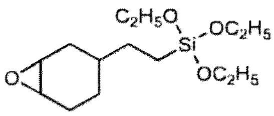 e11), 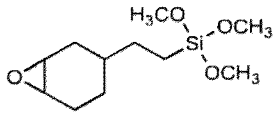 e12), 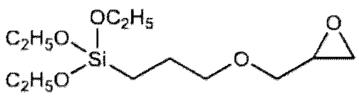 e21),

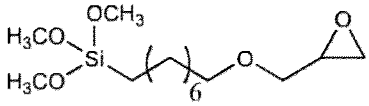 e22), 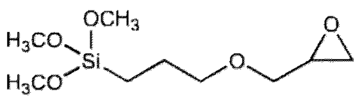 e23),

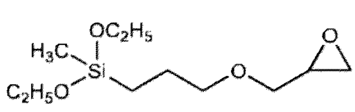 e24), 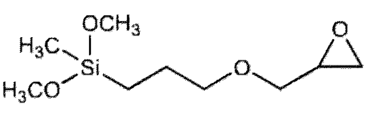 e25),

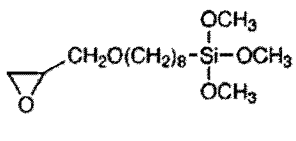 e26), 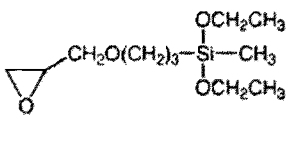 e27), or 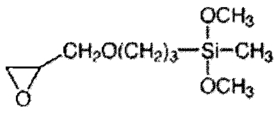 e28).

In one embodiment, or a combination of two or more embodiments, each described herein, the composition comprises either a crosslinked ethylene-based polymer derived from an anhydride-functionalized ethylene-based polymer, or a crosslinked propylene-based polymer derived from an anhydride-functionalized propylene-based polymer.

In one embodiment, or a combination of two or more embodiments, each described herein, composition comprises a crosslinked ethylene-based polymer derived from an anhydride-functionalized ethylene-based polymer, further an anhydride-functionalized ethylene/alpha-olefin interpolymer, and further an anhydride-functionalized ethylene/alpha-olefin copolymer. In a further embodiment, the anhydride is grafted onto the polymer, further the interpolymer, further the copolymer.

In one embodiment, or a combination of two or more embodiments, each described herein, composition comprises a crosslinked propylene-based polymer derived from an anhydride-functionalized propylene-based polymer, further an anhydride-functionalized propylene/ethylene interpolymer or an anhydride-functionalized propylene/alpha-olefin interpolymer, and further an anhydride-functionalized propylene/ethylene copolymer or an anhydride-functionalized propylene/alpha-olefin copolymer. In a further embodiment, the anhydride is grafted onto the polymer, further the interpolymer, further the copolymer.

In one embodiment, or a combination of two or more embodiments, each described herein, *component* $\alpha$ is an anhydride-functionalized ethylene-based polymer, or an anhydride-functionalized propylene-based polymer.

In one embodiment, or a combination of two or more embodiments, each described herein, *component a* is an anhydride-functionalized ethylene-based polymer, further an anhydride-functionalized ethylene/alpha-olefin interpolymer, and further an anhydride-functionalized ethylene/alpha-olefin copolymer. In a further embodiment, the anhydride is grafted onto the polymer, further the interpolymer, further the copolymer.

In one embodiment, or a combination of two or more embodiments, each described herein, *component* $\alpha$ is an anhydride-functionalized propylene-based polymer, further an anhydride-functionalized propylene/ethylene interpolymer or an anhydride-functionalized propylene/alpha-olefin interpolymer, and further an anhydride-functionalized propylene/ethylene copolymer or an anhydride-functionalized propylene/alpha-olefin copolymer. In a further embodiment, the anhydride is grafted onto the polymer, further the interpolymer, further the copolymer.

In one embodiment, or a combination of two or more embodiments, each described herein, for the first aspect, step B takes place at a temperature ≥ 20°C, or ≥ 21°C, or ≥ 22°C, or ≥ 24°C, or ≥ 26°C, or ≥ 28°C, or ≥ 30°C, or ≥ 32°C, or ≥ 34°C, <u>and/or</u> ≤ 100°C, or ≤ 95°C, or ≤ 90°C, or ≤ 26°C, or ≤ 88°C, or ≤ 86°C, or ≤ 85°C, or ≤ 80°C, or ≤ 75°C, or ≤ 70°C, or ≤ 65°C, or ≤ 60°C, or ≤ 55°C, or ≤ 50°C, or ≤ 45°C, or ≤ 40°C.

In one embodiment, or a combination of two or more embodiments, each described herein, for the first aspect, step B takes place at a relative humidity (%RH) ≥ 40%, or ≥ 42%, or ≥ 44%, or ≥ 46%, or ≥ 48%, or ≥ 50%, <u>and/or</u> ≤ 100%, or ≤ 95%, or ≤ 90%, or ≤ 88%, or ≤ 86%, or ≤ 85%.

In one embodiment, or a combination of two or more embodiments, each described herein, the first composition further comprises a tackifier *(component c).* In a further embodiment, weight ratio of *component* $\alpha$ to *component c* is ≥ 1.00, or ≥ 1.20, or ≥ 1.40, or ≥ 1.60, or ≥ 1.80, or ≥ 2.00, or ≥ 2.10, or ≥ 2.20, <u>and/or</u> ≤ 3.00, or ≤ 2.80, or ≤ 2.60, or ≤ 2.50, or ≤ 2.40, or ≤ 2.35, or ≤ 2.30.

In one embodiment, or a combination of two or more embodiments, each described herein, the first composition has a percent increase in melt viscosity at 120°C (%Δη2 at 120°C) < 25%, or ≤ 20%, or ≤ 18%, or ≤ 16%, or ≤ 14%, <u>and/or</u> ≥ 1.0%, or ≥ 2.0%, or ≥ 3.0%, or ≥ 4.0%; and where %Δη2 at 120°C = [(η2 - η1)/η1] x 100, and where η2 is the melt viscosity after 2 hours at 120°C, and η1 is the melt viscosity after 1 hour at 120°C.

In one embodiment, or a combination of two or more embodiments, each described herein, the first composition has a percent increase in melt viscosity at 177°C (%Δη2 at 177°C) ≤ 35%, or ≤ 30%, or ≤ 28%, or ≤ 26%, or ≤ 24%, <u>and/or</u> ≥ 8.0%, or ≥ 10%, or ≥ 12%, or ≥ 15%; and where %Δη2 at 177°C = [(η2 - η1)/η1] x 100, and where η2 is the melt viscosity after 2 hours at 177°C, and η1 is the melt viscosity after 1 hour at 177°C.

In one embodiment, or a combination of two or more embodiments, each described herein, the first composition, after seven days at 22°C, 50% RH, in air atmosphere, has SAFT value ≥ 70°C, or ≥ 72°C, or ≥ 74°C, or ≥ 76°C, or ≥ 78°C, or ≥ 80°C, or ≥ 83°C, or ≥ 85°C, <u>and/or</u> ≤ 170°C, or ≤ 165°C, or ≤ 160°C, or ≤ 155°C, or ≤ 150°C, or ≤ 145°C, or ≤ 140°C, or ≤ 135°C, or ≤ 130°C, or ≤ 125°C, or ≤ 120°C.

Also provided is crosslinked composition formed from the composition of any one embodiment, or a combination of two or more embodiments, each described herein.

Also provided is crosslinked composition formed from the process of any one embodiment, or a combination of two or more embodiments, each described herein.

Also provided is an article comprising the composition of any one embodiment, or a combination of two or more embodiments, each described herein.

Also provided is an article comprising at least one component formed from the composition of any one embodiment, or a combination of two or more embodiments, each described herein.

**Anhydride-Functionalized Olefin-based Polymers**

An "anhydride-functionalized olefin-based polymer" is a olefin-based polymer with anhydride moieties bonded to the olefin-based polymer chain (for example, an anhydride moiety grafted to an ethylene/α-olefin interpolymer, or to a propylene/ethylene interpolymer). Nonlimiting examples of suitable anhydrides include maleic anhydride (MAH), and itaconic anhydride, citraconic anhydride, tetrahydrophthalic anhydride, bromomaleic anhydride, chloromaleic anhydride, nadic anhydride, methylnadic anhydride, and alkenylsuccinic anhydride.

Nonlimiting examples of suitable ethylene-based polymers include ethylene homopolymers, ethylene/alpha-olefin interpolymers, and ethylene/alpha-olefin copolymers. Nonlimiting examples of suitable alpha-olefins include C3-C20 alpha-olefins, or C3-C10 alpha-olefins, or C3-C8 alpha-olefins. Representative alpha-olefins include propylene, 1-butene, 1-pentene, 1-hexene, 1-heptene and 1-octene.

Nonlimiting examples of suitable propylene-based polymers include propylene homopolymers, propylene/ethylene interpolymers, and propylene/alpha-olefin copolymers. Nonlimiting examples of suitable alpha-olefins include C4-C20 alpha-olefins, or C4-C10 alpha-olefins, or C4-C8 alpha-olefins. Representative alpha-olefins include 1-butene, 1-pentene, 1-hexene, 1-heptene and 1-octene.

Additional anhydride-functionalized olefin-based polymer include, but are not limited to, anhydride-functionalized ethylene/alpha-olefin interpolymers and copolymers, anhydride-functionalized propylene/alpha-olefin interpolymers and copolymers, anhydride-functionalized propylene/ethylene interpolymers and copolymers, anhydride-functionalized olefin block copolymers (anhydride-fn-OBCs), EVA functionalized with an anhydride (for example, grafted MAH), APAO (amorphous polyalpha-olefin) functionalized an anhydride (for example, grafted MAH), EMA (ethylene methyl acrylate) functionalized with an anhydride (for example, grafted MAH), EBA (ethylene butyl acrylate) functionalized with an anhydride (for example, grafted MAH).

**Tackifiers**

Tackifiers are known in the art, and may be solids, semi-solids, or liquids at room temperature. Preferred tackifiers include aliphatic, cycloaliphatic and aromatic hydrocarbons, modified hydrocarbons, and hydrogenated versions of such hydrocarbons.

**Waxes**

Waxes include, but are not limited to, paraffin waxes; microcrystalline waxes; high density, low molecular weight polyethylene waxes or polypropylene waxes; thermally degraded waxes; by-product polyethylene waxes; and Fischer-Tropsch waxes. A wax may be present in an amount from 5 to 40 wt%, based on the weight of the first composition.

**Additives and Applications**

A first composition may comprise one or more additives. Additives include, but are not limited to, cure catalysts, fillers, pigments, UV stabilizers, anti-oxidants, processing aids, solvents, and further cure catalysts, UV stabilizers, and anti-oxidants. In one embodiment, an additive is present in an amount ≥ 0.01 wt%, or ≥ 0.02 wt%, or ≥ 0.05 wt%, or ≥ 0.10 wt%, or ≥ 0.20 wt% <u>and/or</u> ≤ 2.0 wt%, or ≤ 1.5 wt%, or ≤ 1.0 wt%, or ≤ 0.90 wt%, or ≤ 0.80 wt%, or ≤ 0.70 wt%, or ≤ 0.60 wt%, or ≤ 0.50 wt%, or ≤ 0.40 wt%, or ≤ 0.30 wt%, based on the weight of the first composition.

The first composition may comprise one or more polymer(s) different from the anhydride-functionalized olefin-based polymer (*component a*). For example, polymers such as polar copolymers such as acrylates and vinyl acetates with ethylene, or polymer blends of a polar copolymer and a non-polar olefin-based polymer. In one embodiment, an additional polymer or polymer blend is present in an amount ≥ 0.5 wt%, or ≥ 1.0 wt%, or ≥ 2.0 wt%, or ≥ 3.0 wt%, or ≥ 4.0 wt% <u>and/or</u> ≤ 10 wt%, or ≤ 9.0 wt%, or ≤ 8.0 wt%, or ≤ 7.0 wt%, or ≤ 6.0 wt%, or ≤ 5.0 wt%, based on the weight of the first composition.

The components of the first composition may be mixed at high temperature in an extruder or in mixing vessels, as is typical for the hot melt adhesive industry. The order of addition of the components can be further optimized to ensure the most stable formulation results. For example, all of the components can be added in one mixing vessel, or if more appropriate, the anhydride-functionalized polymer and the epoxy-silane can be mixed separately first, and in a separate step, then mixed with the rest of the components.

The excellent stability and crosslinking features make the inventive compositions well suited for adhesive applications. The compositions are suitable for those applications in which a long open time is required, such as woodworking or bookbinding applications. Many other applications will benefit from the delayed curing of the compositions.

DEFINITIONS

Unless stated to the contrary, implicit from the context, or customary in the art, all parts and percents are based on weight, and all test methods are current as of the filing date of this disclosure.

The term "composition," as used herein, includes a mixture of materials, which comprise the composition, as well as reaction products and decomposition products formed from the materials of the composition. Any reaction product or decomposition product is typically present in trace or residual amounts.

The term "polymer," as used herein, refers to a polymeric compound prepared by polymerizing monomers,

whether of the same or a different type. The generic term polymer thus, includes the term homopolymer (employed to refer to polymers prepared from only one type of monomer, with the understanding that trace amounts of impurities can be incorporated into the polymer structure), and the term interpolymer as defined hereinafter. Trace amounts of impurities, such as catalyst residues, can be incorporated into and/or within the polymer. Typically, a polymer is stabilized with very low amounts ("ppm" amounts) of one or more stabilizers (for example, antioxidants).

The term "interpolymer," as used herein, refers to a polymer prepared by the polymerization of at least two different types of monomers. The term interpolymer thus includes the term copolymer (employed to refer to polymers prepared from two different types of monomers) and polymers prepared from more than two different types of monomers.

The term "olefin-based polymer," as used herein, refers to a polymer that comprises, in polymerized form, 50 wt% or a majority weight percent of an olefin, such as ethylene or propylene (based on the weight of the polymer), and optionally may comprise one or more comonomers. Olefin-based polymers include, but are not limited to, ethylene/alpha-olefin interpolymers and copolymers, propylene/alpha-olefin interpolymers and copolymers, propylene/ethylene interpolymers and copolymers, olefin block copolymer (OBC), EVA, APAO (amorphous polyalpha-olefin), EMA (ethylene/methyl acrylate), and EBA (ethylene/butyl acrylate).

The term "ethylene-based polymer," as used herein, refers to a polymer that comprises, in polymerized form, 50 wt% or a majority weight percent of ethylene (based on the weight of the polymer), and optionally may comprise one or more comonomers. In one embodiment, the ethylene-based polymer comprises, in polymerized form, ≥ 60 wt%, or ≥ 65 wt%, or ≥ 70 wt%, or ≥ 75 wt%, or ≥ 80 wt%, or ≥ 85 wt%, or ≥ 90 wt% ethylene, based on the weight of the polymer.

The term "ethylene/alpha-olefin interpolymer," as used herein, refers to a random interpolymer that comprises, in polymerized form, 50 wt% or a majority weight percent of ethylene (based on the weight of the interpolymer), and an alpha-olefin. In one embodiment, the ethylene/alpha-olefin interpolymer comprises, in polymerized form, ≥ 60 wt%, or ≥ 65 wt%, or ≥ 70 wt%, or ≥ 75 wt%, or ≥ 80 wt%, or ≥ 85 wt%, or ≥ 90 wt% ethylene, based on the weight of the interpolymer.

The term "ethylene/alpha-olefin copolymer," as used herein, refers to a random copolymer that comprises, in polymerized form, 50 wt% or a majority weight percent of ethylene (based on the weight of the copolymer), and an alpha-olefin, as the only two monomer types. In one embodiment, the ethylene/alpha-olefin copolymer comprises, in polymerized form, ≥ 60 wt%, or ≥ 65 wt%, or ≥ 70 wt%, or ≥ 75 wt%, or ≥ 80 wt%, or ≥ 85 wt%, or ≥ 90 wt% ethylene, based on the weight of the copolymer.

The term "propylene-based polymer," as used herein, refers to a polymer that comprises, in polymerized form, a majority weight percent of propylene (based on the weight of the polymer), and optionally may comprise one or more comonomers. In one embodiment, the propylene-based polymer comprises, in polymerized form, ≥ 60 wt%, or ≥ 65 wt%, or ≥ 70 wt%, or ≥ 75 wt%, or ≥ 80 wt%, or ≥ 85 wt%, or ≥ 90 wt% propylene, based on the weight of the polymer.

The term "propylene/alpha-olefin interpolymer," as used herein, refers to a random interpolymer that comprises, in polymerized form, a majority weight percent of propylene (based on the weight of the interpolymer), and an alpha-olefin. In one embodiment, the propylene/alpha-olefin interpolymer comprises, in polymerized form, ≥ 60 wt%, or ≥ 65 wt%, or ≥ 70 wt%, or ≥ 75 wt%, or ≥ 80 wt%, or ≥ 85 wt%, or ≥ 90 wt% propylene, based on the weight of the interpolymer.

The term "propylene/alpha-olefin copolymer," as used herein, refers to a random copolymer that comprises, in polymerized form, a majority weight percent of propylene (based on the weight of the copolymer), and an alpha-olefin, as the only two monomer types. In one embodiment, the propylene/alpha-olefin copolymer comprises, in polymerized form, ≥ 60 wt%, or ≥ 65 wt%, or ≥ 70 wt%, or ≥ 75 wt%, or ≥ 80 wt%, or ≥ 85 wt%, or ≥ 90 wt% propylene, based on the weight of the copolymer.

The term "propylene/ethylene interpolymer," as used herein, refers to a random interpolymer that comprises, in polymerized form, a majority weight percent of propylene (based on the weight of the interpolymer), and ethylene. In one embodiment, the propylene/ethylene interpolymer comprises, in polymerized form, ≥ 60 wt%, or ≥ 65 wt%, or ≥ 70 wt%, or ≥ 75 wt%, or ≥ 80 wt%, or ≥ 85 wt%, or ≥ 90 wt% propylene, based on the weight of the interpolymer.

The term "propylene/ethylene copolymer," as used herein, refers to a random copolymer that comprises, in polymerized form, a majority weight percent of propylene (based on the weight of the copolymer), and ethylene, as the only two monomer types. In one embodiment, the propylene/ethylene copolymer comprises, in polymerized form, ≥ 60 wt%, or ≥ 65 wt%, or ≥ 70 wt%, or ≥ 75 wt%, or ≥ 80 wt%, or ≥ 85 wt%, or ≥ 90 wt% propylene, based on the weight of the copolymer.

The term "anhydride-functionalized olefin-based polymer," as used herein, refers to an olefin-based polymer that comprises anhydride groups. Such anhydride groups may be derived from maleic anhydride or other anhydride compounds. The anhydride groups may be converted to carboxylic acid groups by reaction with water. In one embodiment, the anhydride is grafted onto the olefin-based polymer.

The phrase "a majority weight percent," as used herein, in reference to a polymer (or interpolymer or copolymer), refers to the amount of monomer present in the greatest amount in the polymer.

The phrase "crosslinked olefin-based polymer," as used herein, is understood by those skilled in the art, and refers to a polymer that has a network structure due to the formation of chemical bonds between polymer chains.

The phrase "crosslinked olefin-based polymer derived from an "anhydride-functionalized olefin-based

polymer," as used herein, refers to the crosslinking (or curing) of the "anhydride-functionalized olefin-based polymer" with at least one epoxy-silane compound, to form the "crosslinked olefin-based polymer."

The term "epoxy- silane compound," as used herein, refers to a compound comprising only one epoxy group (for example, 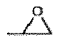) and at least one silane group (for example, Si-R, where R = an alkyl group, an alkoxy group, or hydroxy (OH) group, and further an alkyl group or an alkoxy group). See, for examples, structures e11), e12) and e21)-e28) below.

The term "Percent Relative Humidity (%RH)" is the amount of water vapor present in air, and expressed as a percentage of the amount needed for saturation at the same temperature. The %RH can be measured using a humidity meter, such as a Hygrometer or humidity gage - each measuring the relative humidity in air.

The phrase "exposing the first composition to moisture," as used herein, refers to contacting the first composition to an atmosphere that contains water, typically in the gaseous state. Such an exposure can occur, for example, in air or in an air oven set at a particular %RH.

The term "heteroatom," refers to an atom other than hydrogen or carbon (for example, O, N or P, and typically O).

The term "heteroatom group" refers to a heteroatom or to a chemical group containing one or more heteroatoms.

The terms "hydrocarbon," "hydrocarbyl group," and similar terms, as used herein, refer to, respectively, a chemical compound or chemical group, etc., containing only carbon and hydrogen atoms.

The terms "heterohydrocarbon," "heterohydrocarbyl group," and similar terms, as used herein, refer to, respectively, a chemical compound or a chemical group, etc., containing carbon, hydrogen, in which one or more carbon atoms is/are independently replaced with a heteroatom group (for example, O, N or P).

The terms "hydrocarbylene," "hydrocarbylene group," and similar terms used herein, refer to, respectively, a divalent hydrocarbon, or a divalent hydrocarbon group, etc..

The terms "heterohydrocarbylene," "heterohydrocarbylene group," and similar terms used herein, refer to, respectively, a divalent hydrocarbylene or hydrocarbylene group, etc., in which one or more carbon atoms is/are independently replaced with a heteroatom group.

The terms "heteroalkylene," "heteroalkylene group," and similar terms used herein, refer to, respectively, a divalent alkylene or alkylene group, etc., in which one or more carbon atoms is/are independently replaced with a heteroatom group.

The phrases "thermally treated," "thermal treatment," and similar phrases, as used herein, in reference to a first composition, refer to increasing the temperature of the composition by the application of, for example, heat or radiation. Note, the temperature at which the thermal treatment takes place, refers to the temperature of the composition (for example, the melt temperature of the composition. Typically, the temperature of the composition is equilibrated in a relatively short period to the temperature of the heating device (for example, an oven).

The terms "comprising," "including," "having," and their derivatives, are not intended to exclude the presence of any additional component, step or procedure, whether the same is specifically disclosed. In order to avoid any doubt, all compositions claimed through use of the term "comprising" may include, for example, any additional additive, adjuvant, or compound, whether polymeric or otherwise, unless stated to the contrary. In contrast, the term "consisting essentially of" excludes from the scope of any succeeding recitation any other component, step or procedure, excepting those that are not essential to operability. The term "consisting of" excludes any component, step or procedure, not specifically delineated or listed.

**Listing of Some Process and Composition Features**

**A]** A process to form a composition comprising a crosslinked olefin-based polymer derived from an "anhydride-functionalized olefin-based polymer," said process comprising at least the following steps A) and B):

A) mixing together at least the following *components a* and *b* to form a first composition:

*a)* the "anhydride-functionalized olefin-based polymer," and
*b)* at least one epoxy-silane compound;

B) exposing the first composition to moisture to form the crosslinked olefin-based polymer.

**B]** The process of A] above, wherein step A takes place at a temperature ≥ 120°C, or ≥ 130°C, or ≥ 140°C, or ≥ 150°C, or ≥ 160°C, or ≥ 165°C, or ≥ 170°C, or ≥ 175°C, or ≥ 180°C, and/or ≤ 220°C, or ≤ 215°C, or ≤ 210°C, or ≤ 205°C, or ≤ 200°C, or ≤ 195°C, or ≤ 190°C. C] The process of A] or B] above, wherein step A takes place at a relative

humidity (%RH) ≥ 10%, or ≥ 15%, or ≥ 20%, or ≥ 25%, or ≥ 30%, or ≥ 35%, and/or ≤ 60%, or ≤ 55%, or ≤ 50%, or ≤ 45%, or ≤ 40%.

**D]** The process of any one of A]-C] (A] through C]) above, wherein the molar ratio of anhydride groups on the "anhydride-functionalized olefin-based polymer" to epoxy groups on the epoxy-silane compound is ≥ 0.20, or ≥ 0.25, or ≥ 0.30, or ≥ 0.35, or ≥ 0.40, or ≥ 0.42, or ≥ 0.44, or ≥ 0.46, or ≥ 0.48, or ≥ 0.50, or ≥ 0.55, or ≥ 0.60, and/or ≤100, or ≤ 50.0, or ≤ 20.0, or ≤ 10.0, or ≤ 5.00, or ≤ 4.00, or ≤ 3.00, or ≤ 2.00, or ≤ 1.50, or ≤ 1.20, or ≤ 1.15, or ≤ 1.10, or ≤ 1.05, or ≤ 1.00.

**E]** The process of any one of A]-D] above, wherein the epoxy-silane compound is selected from structures e1) or e2) below:

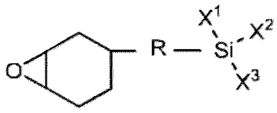 e1),

, where R is an alkylene group or a CHaO-alkylene group, X1, X2 and X3 are each independently an alkoxy group or an alkyl group, and at least one of X1, X2 or X3 is an alkoxy group; or

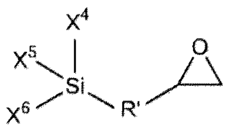 e2),

where R' is an alkylene group or a CHaO-alkylene group, X4, X5 and X6 are each independently an alkoxy group or an alkyl group, and at least one of X4, X5 or X6 is an alkoxy group.

**F]** The process of E] above, wherein for structure e1), X1, X2 and X3 are each independently a C1-C5 alkoxy group or an C1-C5 alkyl group, further a C1-C3 alkoxy group or an C1-C3 alkyl group, and further a C1-C2 alkoxy group or an C1-C2 alkyl group; and for structure e2), X4, X5 and X6 are each independently a C1-C5 alkoxy group or an C1-C5 alkyl group, further a C1-C3 alkoxy group or an C1-C3 alkyl group, and further a C1-C2 alkoxy group or an C1-C2 alkyl group.

**G]** The process of any one of A]-F] above, wherein the epoxy-silane compound is selected from structures e11), e12), e21), e22), e23), e24), e25), e26), e27) or e28) below:

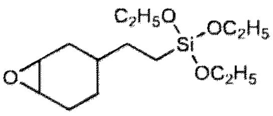 e11), 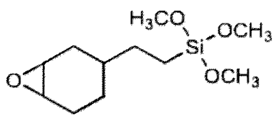 e12), 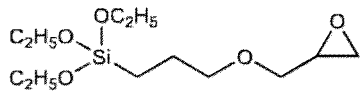 e21),

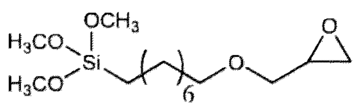 e22), 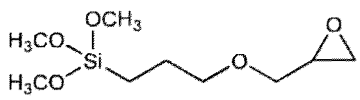 e23),

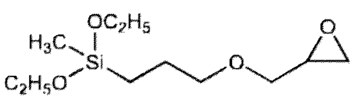 e24), 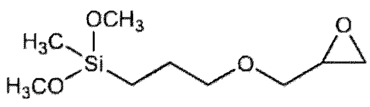 e25),

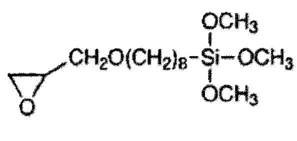 e26), 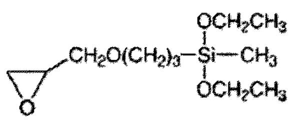 e27), or 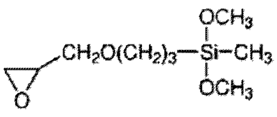 e28).

**H]** The process of any one of A]-G] above, wherein step B takes place at a temperature ≥ 20°C, or ≥ 21°C, or ≥

22°C, or ≥ 24°C, or ≥ 26°C, or ≥ 28°C, or ≥ 30°C, or ≥ 32°C, or ≥ 34°C, and/or ≤ 100°C, or ≤ 95°C, or ≤ 90°C, or ≤ 26°C, or ≤ 88°C, or ≤ 86°C, or ≤ 85°C, or ≤ 80°C, or ≤ 75°C, or ≤ 70°C, or ≤ 65°C, or ≤ 60°C, or ≤ 55°C, or ≤ 50°C, or ≤ 45°C, or ≤ 40°C.

**I]** The process of any one of A]-G] above, wherein step B takes place at a temperature ≥ 20°C, or ≥ 30°C, or ≥ 40°C, or ≥ 50°C, or ≥ 60°C, or ≥ 70°C, or ≥ 80°C, and/or ≤ 150°C, or ≤ 140°C, or ≤ 130°C, or ≤ 120°C, or ≤ 110°C, or ≤ 100°C, or ≤ 90°C.

**J]** The process of any one of A]-I] above, wherein step B takes place at a percent relative humidity (%RH) ≥ 40%, or ≥ 42%, or ≥ 44%, or ≥ 46%, or ≥ 48%, or ≥ 50%, and/or ≤ 100%, or ≤ 95%, or ≤ 90%, or ≤ 88%, or ≤ 86%, or ≤ 85%.

**K]** The process of any one of A]-J] above, wherein the composition comprises either a crosslinked ethylene-based polymer, further a crosslinked ethylene/alpha-olefin interpolymer, and further a crosslinked ethylene/alpha-olefin copolymer, or a crosslinked propylene-based polymer further a crosslinked propylene/ethylene interpolymer or a crosslinked propylene/alpha-olefin interpolymer, and further a crosslinked propylene/ethylene copolymer or a crosslinked propylene/alpha-olefin copolymer.

**L]** The process of any one of A]-J] above, wherein the composition comprises a crosslinked ethylene-based polymer derived from an anhydride-functionalized ethylene-based polymer, further an anhydride-functionalized ethylene/alpha-olefin interpolymer, and further an anhydride-functionalized ethylene/alpha-olefin copolymer.

**M]** The process of any one of A]-J] above, wherein the composition comprises a crosslinked propylene-based polymer derived from an anhydride-functionalized propylene-based polymer, further an anhydride-functionalized propylene/ethylene interpolymer or an anhydride-functionalized propylene/alpha-olefin interpolymer, and further an anhydride-functionalized propylene/ethylene copolymer or an anhydride-functionalized propylene/alpha-olefin copolymer.

**N]** A crosslinked composition formed from the process of any one of A]-M] above.

**A2]** A first composition comprising at least the following *components a* and *b:*

*a)* an "anhydride-functionalized olefin-based polymer;"
*b)* at least one epoxy-silane compound.

**B2]** The first composition of A2] above, wherein the molar ratio of anhydride groups on the "anhydride-functionalized olefin-based polymer" to epoxy groups on the epoxy-silane compound is ≥ 0.20, or ≥ 0.25, or ≥ 0.30, or ≥ 0.35, or ≥ 0.40, or ≥ 0.42, or ≥ 0.44, or ≥ 0.46, or ≥ 0.48, or ≥ 0.50, or ≥ 0.55, or ≥ 0.60, and/or ≤ 100, or ≤ 50.0, or ≤ 20.0, or ≤ 10.0, or ≤ 5.00, or ≤ 4.00, or ≤ 3.00, or ≤ 2.00, or ≤ 1.50, or ≤ 1.20, or ≤ 1.15, or ≤ 1.10, or ≤ 1.05, or ≤ 1.00.

**C2]** The first composition of A2] or B2] above, wherein the epoxy-silane compound is selected from structures e1) or e2) below:

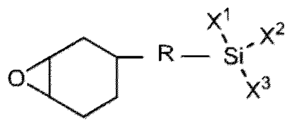
e1),

where R is an alkylene group or a $CH_2O$-alkylene group, X1, X2 and X3 are each independently an alkoxy group or an alkyl, and at least one of X1, X2 or X3 is an alkoxy group; or

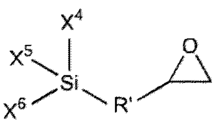
e2),

where R' is an alkylene group or a $CH_2O$-alkylene group, X4, X5 and X6 are each independently an alkoxy group or an alkyl, and at least one of X4, X5 or X6 is an alkoxy group.

**D2]** The first composition of C2] above, wherein for structure e1), X1, X2 and X3 are each independently a C1-C5 alkoxy group or an C1-C5 alkyl group, further a C1-C3 alkoxy group or an C1-C3 alkyl group, and further a C1-C2 alkoxy group or an C1-C2 alkyl group; and for structure e2), X4, X5 and X6 are each independently a C1-C5 alkoxy group or an C1-C5 alkyl group, further a C1-C3 alkoxy group or an C1-C3 alkyl group, and further a C1-C2 alkoxy group or an C1-C2 alkyl group.

**E2]** The first composition of any one of A2]-D2] above, wherein the epoxy-silane compound is selected from structures e11), e12), e21), e22), e23), e24), e25), e26), e27) or e28), each as described above (see G]).

**F2]** The first composition of any one of A2]-E2] above, wherein *component* $\alpha$ is an anhydride-functionalized ethylene-based polymer, or an anhydride-functionalized propylene-based polymer.

**G2]** The first composition of any one of A2]-F2] above, wherein *component a* is an anhydride-functionalized ethylene-based polymer, further an anhydride-functionalized ethylene/alpha-olefin interpolymer, and further an anhydride-functionalized ethylene/alpha-olefin copolymer.

**H2]** The first composition of any one of A2]-F2] above, wherein *component a* is an anhydride-functionalized propylene-based polymer, further an anhydride-functionalized propylene/ethylene interpolymer or an anhydride-functionalized propylene/alpha-olefin interpolymer, and further an anhydride-functionalized propylene/ethylene copolymer or an anhydride-functionalized propylene/alpha-olefin copolymer.

**12]** A crosslinked composition formed from the first composition of any one of A2]-H2] above.

**J2]** A crosslinked composition formed from a first composition comprising at least the following *components* $\alpha$ and *b:*

*a)* an "anhydride-functionalized olefin-based polymer;"
*b)* at least one epoxy-silane compound.

**K2]** The crosslinked composition of J2] above, wherein the molar ratio of the epoxy groups on the epoxy-silane compound *(component b)* to the anhydride groups on the "anhydride-functionalized olefin-based polymer" *(component a*) is ≥ 0.20, or ≥ 0.25, or ≥ 0.30, or ≥ 0.35, or ≥ 0.40, or ≥ 0.42, or ≥ 0.44, or ≥ 0.46, or ≥ 0.48, or ≥ 0.50, and/or ≤ 2.00, or ≤ 1.90, or ≤ 1.80, or ≤ 1.70, or ≤ 1.65, or ≤ 1.60, or ≤ 1.55, or ≤ 1.50, or ≤ 1.40, or ≤ 1.30, or ≤ 1.25, or ≤ 1.20, or ≤ 1.15, or ≤ 1.10, or ≤ 1.05, or ≤ 1.00. In a further embodiment, the anhydride-functionalized olefin-based polymer is an anhydride-functionalized ethylene-based polymer.

**L2]** The crosslinked composition of J2] or K2] above, wherein the epoxy-silane compound is selected from structures e1) or e2) below:

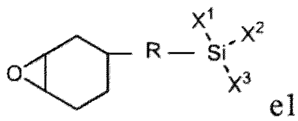
e1),

where R is an alkylene group or a $CH_2O$-alkylene group, X1, X2 and X3 are each independently an alkoxy group or an alkyl group, and at least one of X1, X2 or X3 is an alkoxy group; or

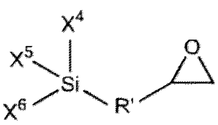
e2),

where R' is an alkylene group or a CHaO-alkylene group, X4, X5 and X6 are each independently an alkoxy group or an alkyl group, and at least one of X4, X5 or X6 is an alkoxy group.

**M2]** The crosslinked composition of L2] above, wherein for structure e1), X1, X2 and X3 are each independently a C1-C5 alkoxy group or an C1-C5 alkyl group, further a C1-C3 alkoxy group or an C1-C3 alkyl group, and further a C1-C2 alkoxy group or an C1-C2 alkyl group; and for structure e2), X4, X5 and X6 are each independently a C1-C5 alkoxy group or an C1-C5 alkyl, further a C1-C3 alkoxy group or an C1-C3 alkyl group, and further a C1-C2 alkoxy group or an C1-C2 alkyl group.

**N2]** The crosslinked composition of any one of J2]-M2] above, wherein the epoxy-silane compound is selected from structures e11), e12), e21), e22), e23), e24), e25), e26), e27) or e28), each as described above (see G]).

**O2]** The crosslinked composition of any one of J2]-N2] above, wherein the first composition is thermally treated at a temperature ≥ 20°C, or ≥ 21°C, or ≥ 22°C, or ≥ 24°C, or ≥ 26°C, or ≥ 28°C, or ≥ 30°C, or ≥ 32°C, or ≥ 34°C, and/or ≤ 100°C, or ≤ 95°C, or ≤ 90°C, or ≤ 26°C, or ≤ 88°C, or ≤ 86°C, or ≤ 85°C, or ≤ 80°C, or ≤ 75°C, or ≤ 70°C, or ≤ 65°C, or ≤ 60°C, or ≤ 55°C, or ≤ 50°C, or ≤ 45°C, or ≤ 40°C.

**P2]** The crosslinked composition of any one of J2]-O2] above, wherein the first composition is thermally treated at a temperature ≥ 20°C, or ≥ 30°C, or ≥ 40°C, or ≥ 50°C, or ≥ 60°C, or ≥ 70°C, or ≥ 80°C, and/or ≤ 150°C, or ≤ 140°C, or ≤ 130°C, or ≤ 120°C, or ≤ 110°C, or ≤ 100°C, or ≤ 90°C.

**Q2]** The crosslinked composition of any one of J2]-P2] above, wherein the first composition is thermally treated at a percent relative humidity (%RH) ≥ 40%, or ≥ 42%, or ≥ 44%, or ≥ 46%, or ≥ 48%, or ≥ 50%, and/or ≤ 100°C, or ≤ 95%, or ≤ 90%, or ≤ 88%, or ≤ 86%, or ≤ 85%.

**R2]** The crosslinked composition of any one of J2]-Q2] above, wherein *component* $\alpha$ is an anhydride-functionalized ethylene-based polymer, or an anhydride-functionalized propylene-based polymer.

**S2]** The crosslinked composition of any one of J2]-R2] above, wherein *component a* is an anhydride-functionalized ethylene-based polymer, further an anhydride-functionalized ethylene/alpha-olefin interpolymer, and further an anhydride-functionalized ethylene/alpha-olefin copolymer.

**T2]** The crosslinked composition of any one of J2]-S2] above, wherein *component* $\alpha$ is an anhydride-functionalized propylene-based polymer, further an anhydride-functionalized propylene/ethylene interpolymer or an anhydride-functionalized propylene/alpha-olefin interpolymer, and further an anhydride-functionalized propylene/ethylene copolymer or an anhydride-functionalized propylene/alpha-olefin copolymer.

**A3]** The process of any one of A]-M] above, or the first composition of any one of A2]-H2] above, or the crosslinked composition of any one of N] or I2]-T2] above, wherein *component* $\alpha$ has a density ≥ 0.860 g/cc, or ≥ 0.862 g/cc, or ≥ 0.864 g/cc, or ≥ 0.866 g/cc, or ≥ 0.868 g/cc, or ≥ 0.870 g/cc, or ≥ 0.872 g/cc, and/or ≤ 0.920 g/cc, or ≤ 0.915 g/cc, or ≤ 0.910 g/cc, or ≤ 0.905 g/cc, or ≤ 0.900 g/cc, or ≤ 0.890 g/cc, or ≤ 0.888 g/cc, or ≤ 0.886 g/cc, or ≤ 0.884 g/cc, or ≤ 0.882 g/cc, or ≤ 0.880 g/cc, or ≤ 0.878 g/cc (1 cc = 1 $cm^3$).

**B3]** The process of any one of A]-M] or A3] above, or the first composition of any one of A2]-H2] or A3] above, or the crosslinked composition of any one of N], I2]-T2] or A3] above, wherein *component a* has a melt viscosity (177°C) ≤ 100,000 mPa·s, or ≤ 90,000 mPa·s, or ≤ 80,000 mPa·s, or ≤ 70,000 mPa·s, or ≤ 60,000 mPa s, or ≤ 50,000 mPa s, or ≤ 45,000 mPa·s, or ≤ 40,000 mPa·s, or ≤ 35,000 mPa·s, or ≤ 30,000 mPa s, or ≤ 25,000 mPa·s, or ≤ 22,000 mPa·s, or ≤ 20,000 mPa·s, or ≤ 18,000 mPa·s, or ≤ 16,000 mPa·s, or ≤ 14,000 mPa·s, and/or ≥ 1,000 mPa s, or ≥ 2,000 mPa·s, or ≥ 3,000 mPa·s, or ≥ 4,000 mPa·s, or ≥ 5,000 mPa·s, or ≥ 6,000 mPa·s, or ≥ 8,000 mPa·s, or ≥ 10,000 mPa·s, or ≥ 12,000 mPa·s. **C3]** The process of any one of A]-M], A3] or B3] above, or the first composition of any one of A2]-H2], A3] or B3] above, or the crosslinked composition of any one of N], I2]-T2], A3] or B3] above, wherein *component a* has a melt index (12) ≥ 20, or ≥ 50, or ≥ 100, or ≥ 200, or ≥ 300, or ≥ 400, or ≥ 500, or ≥ 550 dg/min, and/or ≤ 2,000, or ≤ 1,500, or ≤ 1,000, or ≤ 900, or ≤ 800, or ≤ 700, or ≤ 600 dg/min.

**D3]** The process of any one of A]-M], or A3]-C3] above, or the first composition of any one of A2]-H2], or A3]-C3] above, or the crosslinked composition of any one of N], I2]-T2], or A3]-C3] above, wherein *component a* has a melting point (Tm) ≥ 50°C, or ≥ 55°C, or ≥ 60°C, or ≥ 65°C, or ≥ 70°C, or ≥ 75°C, or ≥ 80°C, or ≥ 85°C, and/or ≤ 150°C, or ≤ 145°C, or ≤ 140°C, or ≤ 135°C, or ≤ 130°C, or ≤ 125°C, or ≤ 120°C, or ≤ 115°C, or ≤ 110°C, or ≤ 105°C, or ≤ 100°C.

**E3]** The process of any one of A]-M], or A3]-D3] above, or the first composition of any one of A2]-H2], or A3]-D3] above, or the crosslinked composition of any one of N], I2]-T2], or A3]-D3] above, wherein *component a* has a glass transition temperature (Tg) ≥ -70°C, or ≥ -68°C, or ≥ -66°C, or ≥ -64°C, or ≥ -62°C, or ≥ -60°C, or ≥ -59°C, and/or ≤ -40°C, or ≤ - 42°C, or ≤ -44°C, or ≤ -46°C, or ≤ -48°C, or ≤ -50°C, or ≤ -52°C, or ≤ -54°C, or ≤ -56°C. **F3]** The process of any one of A]-M], or A3]-E3] above, or the first composition of any one of A2]-H2], or A3]-E3] above, or the crosslinked composition of any one of N], I2]-T2], or A3]-E3] above, wherein *component* $\alpha$ has a percent crystallinity ≥ 10%, or ≥ 12%, or ≥ 14%, or ≥ 16%, or ≥ 18%, or ≥ 19%, and/or ≤ 80%, or ≤ 60%, or ≤ 40%, or ≤ 35%, or ≤ 30%, or ≤ 28%, or ≤ 26%, or ≤ 24%, or ≤ 22%, or ≤ 21%.

**G3]** The process of any one of A]-M], or A3]-F3] above, or the first composition of any one of A2]-H2], or A3]-F3] above, or the crosslinked composition of any one of N], I2]-T2], or A3]-F3] above, wherein *component a* has a weight average molecular weight Mw ≥ 10,000, or ≥ 15,000, or ≥ 20,000, or ≥ 25,000, or ≥ 30,000, or ≥ 32,000, or ≥ 34,000, or ≥ 35,000, and/or ≤ 100,000, or ≤ 80,000, or ≤ 60,000, or ≤ 55,000, or ≤ 50,000, or ≤ 48,000, or ≤ 46,000, or ≤ 44,000, or ≤ 42,000, or ≤ 40,000 g/mol.

**H3]** The process of any one of A]-M], or A3]-G3] above, or the first composition of any one of A2]-H2], or A3]-G3] above, or the crosslinked composition of any one of N], I2]-T2], or A3]-G3] above, wherein *component* $\alpha$ has a number average molecular weight Mn ≥ 6,000, or ≥ 8,000, or ≥ 10,000, or ≥ 12,000, and/or ≤ 70,000, or ≤ 60,000, or ≤ 50,000, or ≤ 40,000, or ≤ 30,000, or ≤ 28,000, or ≤ 26,000, or ≤ 24,000, or ≤ 22,000, or ≤ 20,000, or ≤ 18,000 g/mol.

**13]** The process of any one of A]-M], or A3]-H3] above, or the first composition of any one of A2]-H2], or A3]-H3] above, or the crosslinked composition of any one of N], I2]-T2], or A3]-H3] above, wherein *component a* has a molecular weight distribution (Mw/Mn) ≥ 2.00, or ≥ 2.10, or ≥ 2.20, or ≥ 2.30, or ≥ 2.40 g/mol, and/or ≤ 3.50, or ≤ 3.40, or ≤ 3.30, or ≤ 3.20, or ≤ 3.10, or ≤ 3.00, or ≤ 2.90, or ≤ 2.80, or ≤ 2.70, or ≤ 2.60, or ≤ 2.50.

**J3]** The process of any one of A]-M], or A3]-I3] above, or the first composition of any one of A2]-H2], or A3]-I3] above, or the crosslinked composition of any one of N], I2]-T2], or A3]-I3] above, wherein *component a* comprises ≥ 0.5 wt%, or ≥ 0.6 wt%, or ≥ 0.7 wt%, or ≥ 0.8 wt%, or ≥ 0.9 wt%, or ≥ 1.0 wt%, or ≥ 1.1 wt%, and/or ≤ 20 wt%, or ≤ 15 wt%, or ≤ 10 wt%, or ≤ 5.0 wt%, or ≤ 4.0 wt%, or ≤ 3.5 wt%, or ≤ 3.0 wt%, or ≤ 2.5 wt%, or ≤ 2.0 wt%, or ≤ 1.8 wt%, or ≤ 1.6 wt% or ≤ 1.4 wt% of anhydride groups, based on the weight of the anhydride-functionalized olefin-based polymer.

**K3]** The process of any one of A]-M], or A3]-J3] above, or the first composition of any one of A2]-H2], or A3]-J3] above, or the crosslinked composition of any one of N], I2]-T2], or A3J-J3] above, wherein *component a* is an

anhydride-functionalized ethylene-based polymer, and furthers an anhydride-functionalized ethylene/alpha-olefin interpolymer, and further an anhydride-functionalized ethylene/alpha-olefin copolymer.

**L3]** The process of any one of A]-M], or A3]-K3] above, or the first composition of any one of A2]-H2], or A3]-K3] above, or the crosslinked composition of any one of N], I2]-T2], or A3]-K3] above, wherein *component a* is an anhydride grafted ethylene-based polymer, further a grafted anhydride ethylene/alpha-olefin interpolymer, and further an anhydride grafted ethylene/alpha-olefin copolymer.

**M3]** The process of K3] or L3] above, or the first composition of K3] or L3] above, or the crosslinked composition of K3] or L3] above, wherein alpha-olefin is a C3-C20 alpha-olefin, and further a C3-C10 alpha-olefin, and further selected from propylene, 1-butene, 1-pentene, 1-hexene or 1-octene, and further propylene, 1-butene, 1-hexene or 1-octene, and further propylene, 1-butene or 1-octene, further 1-butene or 1-octene, and further 1-octene.

**N3]** The process of any one of A]-M], or A3]-M3] above, or the first composition of any one of A2]-H2], or A3]-M3] above, or the crosslinked composition of any one of N], I2]-T2], or A3]-M3] above, wherein the anhydride of the anhydride-functionalized olefin-based polymer is derived from maleic anhydride.

**O3]** The process of any one of A]-M], or A3]-N3] above, or the first composition of any one of A2]-H2], or A3]-N3] above, or the crosslinked composition of any one of N], I2]-T2], or A3]-N3] above, wherein the first composition further comprises a tackifier *(component c).*

**P3]** The process of O3] above, or the first composition of O3] above, or the crosslinked composition of O3] above, wherein the weight ratio of *component a* to *component c* is ≥ 1.00, or ≥ 1.20, or ≥ 1.40, or ≥ 1.60, or ≥ 1.80, or ≥ 2.00, or ≥ 2.10, or ≥ 2.20, and/or ≤ 3.00, or ≤ 2.80, or ≤ 2.60, or ≤ 2.50, or ≤ 2.40, or ≤ 2.35, or ≤ 2.30.

**Q3]** The process of any one of A]-M], or A3]-P3] above, or the first composition of any one of A2]-H2], or A3]-P3] above, or the crosslinked composition of any one of N], I2]-T2], or A3]-P3] above, wherein *component c* is a hydrocarbon resin, further a hydrogenated hydrocarbon resin.

**R3]** The process of any one of A]-M], or A3]-Q3] above, or the first composition of any one of A2]-H2], or A3]-Q3] above, or the crosslinked composition of any one of N], I2]-T2], or A3]-Q3] above, wherein the composition comprises ≥ 15 wt%, or ≥ 20 wt%, or ≥ 30 wt%, or ≥ 40 wt%, or ≥ 50 wt%, or ≥ 55 wt%, or ≥ 60 wt%, or ≥ 65 wt%, and/or ≤ 95 wt%, or ≤ 90 wt%, or ≤ 85 wt%, or ≤ 80 wt%, or ≤ 75 wt% of the *component a*, based on the weight of the composition.

**S3]** The process of any one of A]-M], or A3]-R3] above, or the first composition of any one of A2]-H2], or A3]-R3] above, or the crosslinked composition of any one of N], I2]-T2], or A3]-R3] above, wherein the composition comprises ≥ 0.80, or ≥ 0.90, or ≥ 1.00 and/or ≤ 5.00, or ≤ 4.50, or ≤ 4.00, or ≤ 3.50, or ≤ 3.00, or ≤ 2.80, or ≤ 2.60, or ≤ 2.50 parts *component b* per hundred of sum of *components a* and c.

**T3]** The process of any one of A]-M], or A3]-S3] above, or the first composition of any one of A2]-H2], or A3]-S3] above, or the crosslinked composition of any one of N], I2]-T2], or A3]-S3] above, wherein the composition comprises ≥ 15 wt%, or ≥ 20 wt%, or ≥ 22 wt%, or ≥ 24 wt%, or ≥ 26 wt%, or ≥ 28 wt% of the *component c,* and/or ≤ 50 wt%, or ≤ 45 wt%, or ≤ 40 wt%, or ≤ 38 wt%, or ≤ 36 wt%, or ≤ 34 wt%, or ≤ 32 wt%, or ≤ 30 wt% of the *component c,* based on the weight of the composition.

**U3]** The process of any one of A]-M], or A3]-T3] above, or the first composition of any one of A2]-H2], or A3]-T3] above, or the crosslinked composition of any one of N], I2]-T2], or A3]-T3] above, wherein the composition comprises ≥ 80.0 wt%, or ≥ 90.0 wt%, or ≥ 92.0 wt%, or ≥ 94.0 wt%, or ≥ 96.0 wt%, or ≥ 98.0 wt%, or ≥ 99.0 wt%, or ≥ 99.2 wt%, or ≥ 99.5 wt% and/or ≤ 100.0 wt%, or ≤ 99.9 wt%, < 99.8 wt%, or ≤ 99.7 wt%, or ≤ 99.6 wt% of the sum of *components a, b and c*, based on the weight of the composition.

**V3]** The process of any one of A]-M], or A3]-U3] above, or the first composition of any one of A2]-H2], or A3]-U3] above, or the crosslinked composition of any one of N], I2]-T2], or A3]-U3] above, wherein the first composition has a melt viscosity (η1), after 1 hour at 120°C, ≥ 5,000, or ≥ 10,000, or ≥ 15,000, or ≥ 20,000, or ≥ 25,000, or ≥ 30,000, or ≥ 35,000, or ≥ 40,000 mPa·s, and/or ≤ 60,000, or ≤ 65,000, or ≤ 55,000, or ≤ 50,000, or ≤ 45,000mPa s. **W3]** The process of any one of A]-M], or A3]-V3] above, or the first composition of any one of A2]-H2], or A3]-V3] above, or the crosslinked composition of any one of N], 12]-T2], or A3]-V3] above, wherein the first composition has a melt viscosity (η1), after 1 hour at 177°C, ≥ 1,000, or ≥ 2,000, or ≥ 3,000, or ≥ 4,000, or ≥ 4,500, or ≥ 5,000, or ≥ 5,500 mPa·s, and/or ≤ 10,000, or ≤ 9,000, or ≤ 8,000 mPa·s.

**X3]** The process of any one of A]-M], or A3]-W3] above, or the first composition of any one of A2]-H2], or A3]-W3] above, or the crosslinked composition of any one of N], I2]-T2], or A3]-W3] above, wherein the first composition has a percent increase in melt viscosity at 120°C (%Δη3 at 120°C) ≤ 35%, or ≤ 30%, or ≤ 28%, or ≤ 26%, or ≤ 25%, or ≤ 24%, and/or ≥ 1.0%, or ≥ 5.0%, or ≥ 8.0%, or ≥ 10%; and where %Δη3 at 120°C = [(η3 - η1)/η1] x 100, and where η3 is the melt viscosity after 3 hours at 120°C, and η1 is the melt viscosity after 1 hour at 120°C.

**Y3]** The process of any one of A]-M], or A3]-X3] above, or the first composition of any one of A2]-H2], or A3]-X3] above, or the crosslinked composition of any one of N], I2]-T2], or A3]-X3] above, wherein the first composition has a percent increase in melt viscosity at 120°C (%Δη4 at 120°C) ≤ 45%, or ≤ 40%, or ≤ 38%, or ≤ 36% and/or ≥ 10%, or ≥ 15%, or ≥ 20%; and where %Δη4 at 120°C = [(η4 - η1)/η1] x 100, and where η4 is the melt viscosity after 4 hours at 120°C, and η1 is the melt viscosity after 1 hour at 120°C.

**Z3]** The process of any one of A]-M], or A3]-Y3] above, or the first composition of any one of A2]-H2], or A3]-Y3] above, or the crosslinked composition of any one of N], I2]-T2], or A3]-Y3] above, wherein the first composition has a percent increase in melt viscosity at 177°C (%$\Delta\eta$3 at 177°C) ≤ 75%, or ≤ 72%, or ≤ 70%, or ≤ 69%, or ≤ 65%, ≤ 62%, or ≤ 60%, or ≤ 58%, or ≤ 55%, and/or ≥ 12%, or ≥ 14%, or ≥ 16%; and where %$\Delta\eta$3 at 177°C = [($\eta$3 - $\eta$1)/$\eta$1] x 100, and where $\eta$3 is the melt viscosity after 3 hours at 177°C, and $\eta$1 is the melt viscosity after 1 hour at 177°C.

**A4]** The process of any one of A]-M], or A3]-Z3] above, or the first composition of any one of A2]-H2], or A3]-Z3] above, or the crosslinked composition of any one of N], I2]-T2], or A3]-Z3] above, wherein the first composition, after three days at 22°C, 50% RH, in air atmosphere, has SAFT value ≥ 70°C, or ≥ 72°C, or ≥ 74°C, or ≥ 76°C, or ≥ 78°C, or ≥ 80°C, or ≥ 83°C, or ≥ 85°C, or ≥ 90°C and/or ≤ 170°C, or ≤ 165°C, or ≤ 160°C, or ≤ 155°C, or ≤ 150°C, or ≤ 145°C, or ≤ 140°C, or ≤ 135°C, or ≤ 130°C, or ≤ 125°C, or ≤ 120°C.

**B4]** The process of any one of A]-M], or A3]-A4] above, or the first composition of any one of A2]-H2], or A3]-A4] above, or the crosslinked composition of any one of N], I2]-T2], or A3]-A4] above, wherein the first composition, after seven days at 35°C, 85% RH, in air, has SAFT value ≥ 80°C, or ≥ 85°C, or ≥ 88°C, or ≥ 90°C, or ≥ 92°C, or ≥ 94°C, or ≥ 96°C, or ≥ 98°C, or ≥ 100°C, or ≥ 102°C, or ≥ 104°C, and/or ≤ 200°C, or ≤ 190°C, or ≤ 180°C, or ≤ 175°C, or ≤ 170°C, or ≤ 160°C, or ≤ 150°C, or ≤ 140°C, or ≤ 135°C, or ≤ 130°C, or ≤ 125°C. **C4]** The process of any one of A]-M], or A3]-B4] above, or the first composition of any one of A2]-H2], or A3]-B4] above, or the crosslinked composition of any one of N], I2]-T2], or A3]-B4] above, wherein the first composition, after seven days at 85°C, 85% RH, in air, has SAFT value ≥ 100°C, or ≥ 115°C, or ≥ 118°C, or ≥ 120°C, or ≥ 122°C, or ≥ 124°C, or ≥ 126°C, or ≥ 128°C, and/or ≤ 200°C, or ≤ 190°C, or ≤ 185°C, or ≤ 180°C, or ≤ 175°C.

**D4]** The process of any one of A]-M], or A3]-C4] above, or the first composition of any one of A2]-H2], or A3]-C4] above, or the crosslinked composition of any one of N], I2]-T2], or A3]-C4] above, wherein the first composition further comprises at least one additive, and further at least one antioxidant.

**E4]** The process of any one of A]-M], or A3]-D4] above, or the first composition of any one of A2]-H2], or A3]-D4] above, or the crosslinked composition of any one of N], I2]-T2], or A3]-D4] above, wherein the first composition further comprises a polymer, different from *component* $\alpha$ in one or more features, such as monomer(s) types, monomer distributions, melt viscosity (177°C), density, or any combination thereof.

F4] The process of any one of A]-M], or A3]-E4] above, or the first composition of any one of A2]-H2], or A3]-E4] above, or the crosslinked composition of any one of N], I2]-T2], or A3]-E4] above, wherein the first composition comprises ≤ 0.50 ppm, or ≤ 0.20 ppm, or ≤ 0.10 ppm, or ≤ 0.05 ppm, or ≤ 0.02 ppm, or ≤ 0.01 ppm of a peroxide, and further the first composition does not comprise a peroxide.

**G4]** The process of any one of A]-M], or A3]-F4] above, or the first composition of any one of A2]-H2], or A3]-F4] above, or the crosslinked composition of any one of N], I2]-T2], or A3]-F4] above, wherein the crosslinked composition comprises at least one structure selected from CL1, CL2, CL3 or any combination thereof:

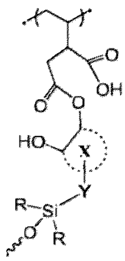 CL1), 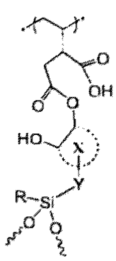 CL2), 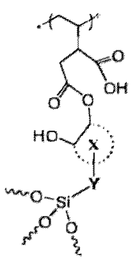 CL3);

and wherein, independently, for each of CL1), CL2), CL3),

each " 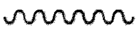 " notation independently represents a portion of another polymer chain of the crosslinked composition;
each asterisk (*) independently represents a portion of the remaining polymer chain bonded to the respective -CH2-CHZ- group noted above, where Z is the respective pendant crosslinked site noted above;
X is the remaining portion of a C3 to C8, further a C4 to C7, further a C5 to C6 ring structure, which contains a carbon atom that is bonded to Y, or X is not present, and Y is bonded to the terminal carbon atom of a "-CH(OH)-$CH_2$-O-" bridge;
Y is independently a hydrocarbylene group or a heterohydrocarbylene group;
each R is independently an OH group, an alkoxy group or an alkyl group.

**A5]** A crosslinked composition comprising at least one of the following structure CL1, CL2, CL3 or any combination thereof, and where CL1, CL2 and CL3 are each described above (see G4]).

**B5]** The first composition of any one of A2]-H2], or A3]-G4] above, wherein the first composition is an adhesive, and further a hot melt adhesive.

**C5]** An article comprising at least one component comprising the first composition of any one of A2]-H2], A3]-G4] or B5] above, or the crosslinked composition of any one of N], 12]-T2], A3]-G4] or A5] above.

D5] An article comprising at least one component formed from the first composition of any one of A2]-H2], A3]-G4], or B5] above, or the crosslinked composition of any one of N], I2]-T2], A3]-G4] or A5] above.

**E5]** The article of C5] of D5] above, wherein the composition adheres together two surfaces of the article.

**F5]** The article of C5] or D5] above, wherein the article is furniture, a book or a container.

**G5]** The process of any one of A]-M], A3]-J3] or N3]-G4] above, or the first composition of any one of A2]-H2], A3]-J3] or N3]-G4] above, or the crosslinked composition of any one of N], I2]-T2], A3]-J3] or N3]-G4] above, wherein *component a* is an anhydride-functionalized propylene-based polymer, and further an anhydride-functionalized propylene/ethylene interpolymer or an anhydride-functionalized propylene/alpha-olefin interpolymer, and further an anhydride-functionalized propylene/ethylene copolymer or an anhydride-functionalized propylene/alpha-olefin copolymer.

**H5]** The process of any one of A]-M], A3]-J3], N3]-G4] or G5] above, or the first composition of any one of A2]-H2], A3]-J3], N3]-G4] or G5] above, or the crosslinked composition of any one of N], I2]-T2], A3]-J3], N3]-G4] or G5] above, wherein *component* $\alpha$ is an anhydride-grafted propylene-based polymer, and further an anhydride-grafted propylene/ethylene interpolymer or an anhydride-grafted propylene/alpha-olefin interpolymer, and further an anhydride-grafted propylene/ethylene copolymer or an anhydride-grafted propylene/alpha-olefin copolymer.

**15]** The process of G5] or H5] above, or the first composition of G5] or H5] above, or the crosslinked composition of G5] or H5] above, wherein alpha-olefin is a C4-C20 alpha-olefin, and further a C4-C10 alpha-olefin, and further selected from 1-butene, 1-pentene, 1-hexene or 1-octene, and further 1-butene, 1-hexene or 1-octene, and further 1-butene or 1-octene, and further 1-octene.

**J5]** The process of any one of A]-M], A3]-G4] or G5]-15] above, or the first composition of any one of A2]-H2], A3]-G4] or G5]-15] above, or the crosslinked composition of any one of N], I2]-T2], A3]-G4] or G5]-15 above, wherein the first composition further comprises at least one wax.

TEST METHODS

**Melt Viscosity of Polymer and First Composition**

Melt viscosity was measured in accordance with ASTM D 3236, using a Brookfield Viscometer (Model DV0III, version 3), and a SC-31 hot-melt viscometer spindle, at the following temperatures: a) 177°C for the anhydride functionalized olefin-based polymer *(component a*); and b) 120°C, 150°C or 177°C for the first composition. This method can also be used to measure the melt viscosity of the tackifier (at 160°C). The sample was poured into an aluminum disposable tube-shaped chamber, which is, in turn, inserted into a Brookfield Thermosel, and locked into place. The sample chamber had a notch on the bottom that fits the bottom of the Brookfield Thermosel, to ensure that the chamber was not allowed to turn, when the spindle was inserted and spinning. The sample (approximately 8-10 grams) was heated to the required temperature, until the melted sample was one inch below the top of the sample chamber. The viscometer apparatus was lowered, and the spindle was submerged into the middle of the sample chamber, wherein the spindle did not touch the sides of the chamber. Lowering was continued, until the brackets on the viscometer aligned on the Thermosel. The viscometer was turned on, and set to operate at a steady shear rate, which led to a torque reading in the range of 40 to 60 percent of the total torque capacity, based on the rpm output of the viscometer. Readings were taken every minute, for 15 minutes, or until the values stabilized, at which point, a final reading was recorded.

**Differential Scanning Calorimetry (DSC)**

Differential Scanning Calorimetry (DSC), as discussed below, is used to measure Tm, Tc, Tg and crystallinity in ethylene-based (PE) samples and propylene-based (PP) samples, unless noted otherwise. Each sample (0.5 g) is compression molded into a film, at 25000 psi, 190°C, for 10-15 seconds. About 5 to 8 mg of film sample is weighed and placed in a DSC pan. The lid is crimped on the pan to ensure a closed atmosphere. The sample pan is placed in a DSC cell, and then heated, at a rate of approximately 10°C/min, to a temperature of 180°C for PE (230°C for PP). The sample is kept at this temperature for three minutes. Then the sample is cooled at a rate of 10°C/min to -90°C for PE (-60°C for PP), and kept isothermally at that temperature for three minutes. The sample is next heated at a rate of 10°C/min, until complete melting (second heat). Unless otherwise stated, melting point (Tm) and the glass transition temperature (Tg) of each polymer sample are determined from the second heat curve, and the crystallization temperature (Tc) is determined from the first cooling curve. The Tg and the respective peak temperature for the Tm are noted. The percent crystallinity can be calculated by dividing the heat of fusion (Hf), determined from the second heat curve, by a theoretical heat of

fusion of 292 J/g for PE (165 J/g for PP), and multiplying this quantity by 100 (for example, % cryst. = (Hf / 292 J/g) x 100 (for PE)).

**Density**

The density of a polymer is measured by preparing the polymer sample according to ASTM D 1928, and then measuring the density according to ASTM D792, Method B, within one hour of sample pressing.

**Gel Permeation Chromatography - Ethylene-based Polymers**

The chromatographic system consists of a PolymerChar GPC-IR (Valencia, Spain) high temperature GPC chromatograph, equipped with an internal infra-red detector (IR5). The autosampler oven compartment is set at 160°C, and the column compartment is set at 150°C. The columns are four AGILENT "Mixed A" 30 cm, 20-micron linear mixed-bed columns. The chromatographic solvent is 1,2,4-trichlorobenzene, which contains 200 ppm of butylated hydroxytoluene (BHT). The solvent source is nitrogen sparged. The injection volume is 200 microliters, and the flow rate is 1.0 milliliters/minute.

Calibration of the GPC column set is performed with 21 narrow molecular weight distribution polystyrene standards, with molecular weights ranging from 580 to 8,400,000 g/mol, and which are arranged in six "cocktail" mixtures, with at least a decade of separation between individual molecular weights. The standards are purchased from Agilent Technologies. The polystyrene standards are prepared at "0.025 grams in 50 milliliters" of solvent, for molecular weights equal to, or greater than, 1,000,000, and at "0.05 grams in 50 milliliters" of solvent, for molecular weights less than 1,000,000. The polystyrene standards are dissolved at 80°C, with gentle agitation, for 30 minutes. The polystyrene standard peak molecular weights are converted to polyethylene molecular weights using Equation 1 (as described in Williams and Ward, J. Polym. Sci., Polym. Let., 6, 621 (1968)):

$$M_{polyethylene} = A \times \left(M_{polystyrene}\right)^{B} \quad \text{(EQ1)},$$

where M is the molecular weight, A has a value of 0.4315 and B is equal to 1.0.

A fifth order polynomial is used to fit the respective polyethylene-equivalent calibration points. A small adjustment to A (from approximately 0.375 to 0.445) is made to correct for column resolution and band-broadening effects, such that linear homopolymer polyethylene standard is obtained at 120,000 Mw.

The total plate count of the GPC column set is performed with decane (prepared at "0.04 g in 50 milliliters" of TCB, and dissolved for 20 minutes with gentle agitation.) The plate count (Equation 2) and symmetry (Equation 3) are measured on a 200 microliter injection according to the following equations:

$$Plate\ Count = 5.54 * \left(\frac{(\mathrm{RV_{Peak\ Max}}}{Peak\ Width\ at\ \frac{1}{2}height}\right)^{2} \quad \text{(EQ2)},$$

where RV is the retention volume in milliliters, the peak width is in milliliters, the peak max is the maximum height of the peak, and ½ height is ½ height of the peak maximum; and

$$Symmetry = \frac{(Rear\ Peak\ RV_{one\ tenth\ height} - RV_{Peak\ max})}{(RV_{Peak\ max} - Front\ Peak\ RV_{one\ tenth\ height})} \quad \text{(EQ3)},$$

where RV is the retention volume in milliliters, and the peak width is in milliliters, Peak max is the maximum position of the peak, one tenth height is 1/10 height of the peak maximum, and where rear peak refers to the peak tail at later retention volumes than the peak max, and where front peak refers to the peak front at earlier retention volumes than the peak max. The plate count for the chromatographic system should be greater than 18,000, and symmetry should be between 0.98 and 1.22.

Samples are prepared in a semi-automatic manner with the PolymerChar "Instrument Control" Software, wherein the samples are weight-targeted at "2 mg/ml," and the solvent (contains 200 ppm BHT) is added to a pre nitrogen-sparged, septa-capped vial, via the PolymerChar high temperature autosampler. The samples are dissolved for two hours at 160°C under "low speed" shaking.

The calculations of $Mn_{(GPC)}$, $M_{W(GPC)}$, and $M_{Z(GPC)}$ are based on GPC results using the internal IR5 detector

(measurement channel) of the PolymerChar GPC-IR chromatograph according to Equations 4-6, using PolymerChar GPCOne™ software, the baseline-subtracted IR chromatogram at each equally-spaced data collection point (i), and the polyethylene equivalent molecular weight obtained from the narrow standard calibration curve for the point (i) from Equation 1. Equations 4-6 are as follows:

$$Mn_{(GPC)} = \frac{\sum^{i} IR_i}{\sum^{i}\left( IR_i / M_{polyethylene_i} \right)} \quad \text{(EQ 4)},$$

$$Mw_{(GPC)} = \frac{\sum^{i}\left( IR_i * M_{polyethylene_i} \right)}{\sum^{i} IR_i} \quad \text{(EQ 5)},$$

and

$$Mz_{(GPC)} = \frac{\sum^{i}\left( IR_i * M_{polyethylene_i}^{2} \right)}{\sum^{i}\left( IR_i * M_{polyethylene_i} \right)} \quad \text{(EQ 6)}.$$

In order to monitor the deviations over time, a flowrate marker (decane) is introduced into each sample, via a micropump controlled with the PolymerChar GPC-IR system. This flowrate marker (FM) is used to linearly correct the pump flowrate (Flowrate(nominal)) for each sample, by RV alignment of the respective decane peak within the sample (RV(FM Sample)), to that of the decane peak within the narrow standards calibration (RV(FM Calibrated)). Any changes in the time of the decane marker peak are then assumed to be related to a linear-shift in flowrate (Flowrate(effective)) for the entire run. To facilitate the highest accuracy of a RV measurement of the flow marker peak, a least-squares fitting routine is used to fit the peak of the flow marker concentration chromatogram to a quadratic equation. The first derivative of the quadratic equation is then used to solve for the true peak position. After calibrating the system, based on a flow marker peak, the effective flowrate (with respect to the narrow standards calibration) is calculated as Equation 7: Flowrate(effective) = Flowrate(nominal) * (RV(FM Calibrated) / RV(FM Sample)) (EQ7). Processing of the flow marker peak is done via the PolymerChar GPCOne™ Software. Acceptable flowrate correction is such that the effective flowrate is within +/-0.7% of the nominal flowrate.

**Melt Index**

The melt index (12) of an ethylene-based polymer is measured in accordance with ASTM D-1238, condition 190°C/2.16 kg. The melt flow rate (MFR) of a propylene-based polymer is measured in accordance with ASTM D-1238, condition 230°C/2.16 kg, except where noted.

**Shear Adhesion Failure Temperature (SAFT)**

Shear Adhesion Failure Temperature (SAFT) is measured according to ASTM D 4498, with a 500 gram weight, using a Chem instruments OSI-8 programmable oven. Each test sample is initially equilibrated at 40°C in the oven for 10 minutes, and the oven temperature is increased at an average rate of 0.5°C/minute. The temperature at which the adhesive bond fails is recorded. Each test sample is in a shear mode configuration with the 500 gram weight.

Each SAFT test sample is prepared using two sheets of "60 g/m$^2$" Kraft paper, each sheet is "6 in. x 12 in. (152 mm x 305 mm)" in dimensions. On the bottom sheet, lengthwise, and separated by a gap of one inch (25 mm), are adhered, in parallel fashion, two "1.75 in or 2 in (45 mm or 51 mm)" wide strips of a one sided, pressure-sensitive tape, such as masking tape. The two strips of tape are placed, such that the "one inch gap" runs lengthwise, down the center of the bottom sheet.

The adhesive composition (first composition) to be tested is heated to 170°C (338°F), and then drizzled in an even manner down the center of the "one inch gap," formed between the two strips of tape. Then, before the composition can unduly thicken, a bonded paper template is quickly formed as follows. A rod rides immediately down the bottom

sheet, leveling the adhesive composition within the gap. This rod is shimmed with a strip of the same tape on each side of the gap. After the pass of this first rod, a second sheet of the Kraft paper is aligned to, and laid on top of, the bottom sheet, and a second rod rides immediately down this top sheet, to form a bonded paper template. Overall, the first rod evenly spreads the composition in the gap region between the tape strips, and the second rod evenly compresses the second sheet over the top of the gap region and over the top of the tape strips. Within the bonded paper template, a single one inch (25.4 mm) wide strip of the adhesive composition bonds the bottom and top paper sheets. The paper template is cut crosswise into strips of "one inch (25.4 mm)" in width" and "three inches (76.2 mm)" in length, to form test samples. Each test sample had a "one inch x one inch" adhesive bond area in the center, with a bond thickness of about 8 to 10 mils (0.008 to 0.010 inch). Each test sample is cured in air for a specified time, temperature and %RH. The test samples are then used in the SAFT testing, as noted above. For each composition, two test samples are tested, and the average failure temperature recorded.

EXPERIMENTAL

**Reagents and Polymer**

Reagents and Polymer are shown in Table 1.

Table 1: Reagents and Polymers

| | Product Name | Description | Source |
|---|---|---|---|
| Polymer | AFFINITY GA 1000R | Density: 0.878 g/cm$^3$; Brookfield Viscosity @ 177°C (350 °F): 13,000 mPa·s; Approx. Melt Index: 660 g/10 min (190°C, 2.16 kg weight)), see U.S. Patent 7199180 (footnote to Table 1); Tm = 68°C, Tg = -58°C, %cryst. = 20%; MAH-grafted ethylene/octene copolymer. | Dow |
| Polymer | FUSABOND P353 | Density: 0.904 g/cm$^3$; Melt Index: 22.4 g/10 min (160°C, 325 g weight); Tm = 132°C (ASTM D3418); MAH-fn-polypropylene copolymer. | Dow |
| Epoxy-silane 1 | 2-(3,4-Epoxycyclohexyl)-ethyltriethoxysilane (CAS: 10217-34-2, Mw 288) | 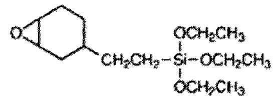 CAS: 10217-34-2 | TCI |
| Epoxy-silane 2 | Triethoxy-(3-Glycidyloxypropyl)-triethoxysilane (CAS: 2602-34-8, Mw 278) | 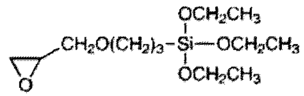 CAS: 2602-34-8 | TCI |
| Epoxy-silane 3 | 2-(3,4-Epoxycyclohexyl)-ethyltrimethoxysilane (CAS: 3388-04-3, Mw 246) | 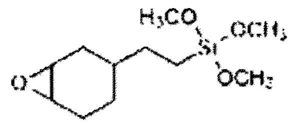 CAS: 3388-04 | TCI |
| Epoxy-silane 4 | 3-Glycidyloxypropyltrimethoxy-silane (CAS:2530-83-8, Mw 236) | 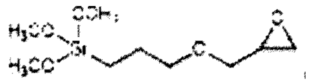 CAS: 2530-83-8 | TCI |
| Tackifier | ESCOREZ 5400 | Molecular weight (Mn): 400 g/mol, Melt Viscosity @ 320°F (160°C): 800 mPa·s, Tg: 126°F (55.2°C). | ExxonMobil |
| Polymer stabilizer 1 | IRGANOX 1010 | 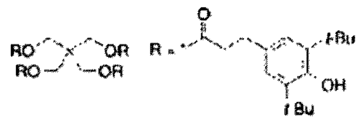 CAS: 6683-19-8 | BASF |
| Aminosilane 1 | N-[3-(Trimethoxysilyl)propyl]-butan-1-amine (CAS: 31024-56-3, Mw 235) | 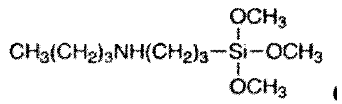 CAS: 31024-56-3 | TCI |

(continued)

| | Product Name | Description | | Source |
|---|---|---|---|---|
| Aminosilane 2 | 3-Aminopropyltriethoxysilane (CAS:919-30-2, Mw 221) | 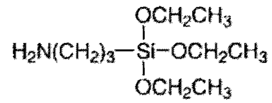 | CAS: 919-30-2 | TCI |
| Aminosilane 3 | 3-Aminopropyldiethoxy-methylsilane (CAS:3179-76-8, Mw 191) | 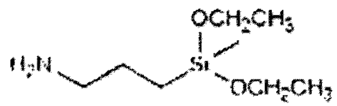 | CAS:3179-76-8 | TCI |

The following epoxy-silane compounds can also be used:

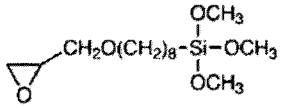 , 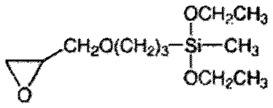 , and 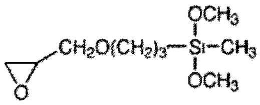 .

For the AFFINITY GA 1000R polymer, after a long storage time, in air, usually all or most of the anhydride groups convert to acid groups, as seen by FTIR. Thus, the AFFINITY GA 1000R was thermally treated at 180°C, for 15-20 minutes, with stirring, to completely converts the acid group into anhydride groups (anhydride treating). The conversion can be monitored by FTIR. Herein "AFFINITY GA 1000R Acid" in Table 2 below indicates AFFINITY GA 1000R without anhydride treating, while "AFFINITY GA 1000R - Anhydride" is the polymer after anhydride treating.

## Study 1 - FTIR Analysis of the Crosslinking Reaction

*FTIR Testing*

A first composition, before and after cure, was examined by Fourier Transform Infrared (FTIR) spectroscopy, using a single-reflection ATR attachment equipped with a diamond crystal. Depth of penetration during the ATR analysis was estimated to be two microns. The spectrum was collected using a Thermo Electron Nicolet 5700 Optical Bench, with 32 scans at 4 $cm^{-1}$ resolution.

***Preparation of FTIR Film***

*First Composition*

The composition components (70 g AFFINITY GA 1000R Anhydride, 30 g Tackifier ESCOREZ 5400 and 0.5 g IRGANOX 1010), except the cross-linker, were added to a 250 mL, stainless steel container. This container was then placed in an air circulating oven, and the temperature was increased to 180°C (oven temp.), and the composition was thermally treated until completely melted (30-60 minutes). The composition was then stirred with a mechanical stirrer for 15 minutes at 180-200°C. Next, 2-(3,4-epoxycyclohexyl)-ethyltrimethoxysilane, CAS: 3388-04-3 (1.25g) was added, and the resulting mixture was stirred for 4-7 minutes at 180-200°C. The final mixture was then poured into a 1 mm thick film mold, and allowed to cool, to obtain a film for the FTIR testing.

*Crosslinked Composition*

The above film was cured under the following condition: 35°C/85%RH, air circulating oven, for 7 days.

***Analysis of data:***

The FTIR spectra of AFFINITY GA 1000R Acid and Anhydride are shown in Figure 1 and Figure 2, respectively. The C=O signal of acid is around 1711 $cm^{-1}$, while anhydride signal is around 1785 $cm^{-1}$. The FTIR of the first composition just after mixing is shown in Figure 3. This FTIR profile clearly shows that no ester (1735-1740 $cm^{-1}$) signal and no silicone (1030-1050 $cm^{-1}$) signal are present in the mixed composition. A signal from the anhydride (1786 $cm^{-1}$) is present, which indicates no appreciable reaction between anhydride groups of the MAH-g-polymer and the epoxy-silane during the mixture step (physical blending).

The FTIR of composition, after curing, is shown in Figure 4. The anhydride signal disappears, while new signals for OH (3598 $cm^{-1}$), ester bond (1735 $cm^{-1}$), acid (1723 $cm^{-1}$) and silicone (1039 $cm^{-1}$) appear. These results strongly demonstrate the proposed mechanism of Scheme 1 below. In Scheme 1, each " 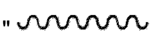 " notation independently represents a portion of another polymer chain of the crosslinked composition, and each asterisk (*) independently represents a portion of the remaining polymer chain bonded to the respective -CH2-CHZ- group noted below, where Z is the respective pendant crosslinked site noted below.

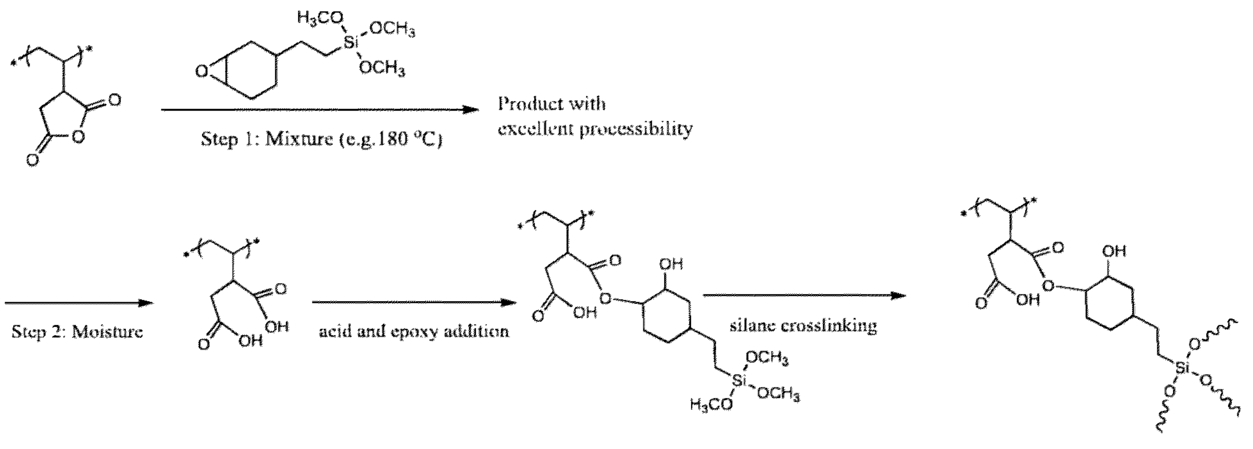


Scheme 1

**Study** 2 - **Thermal Stability and Adhesion**

*Preparation of the First Composition*

*First Composition Containing the "AFFINITY GA 1000R - Anhydride "*

For each composition, the corresponding components, as shown in Table 2, except for the crosslinker (epoxy-silane or amino-silane), were weighed into a stainless steel container (250 mL), which was placed in an oven, and heated at a temperature of 180°C (oven temp.), for 30-60 minutes, until the composition was melted. The composition was then melt blended, at a temperature from 180-200°C, for 15 minutes, with a "Paravisc style" mixing head, running at 90-150 rotations per minute (rpm). The crosslinker was added, and the composition was stirred for 10 minutes at 180-200°C. The comparative first compositions (CE 2 - CE 4) each gelled during the mixing stage.

The viscosity stability of each first composition (IE 1 - IE 8) was examined by measuring the melt viscosity of the composition over time. Results are shown in Table 3.

*First Composition Containing the "AFFINITY GA 1000R -Acid"*

The components of the composition (CE 5), as shown in Table 2, were weighed into the stainless steel container, and melt blended, at a temperature from 180-200°C, for 15 minutes, with the "Paravisc style" mixing head, running at 90-150 rotations per minute (rpm). The composition gelled during this mixing stage.

***Cure of the First Composition (see Table 4, CE 1, CE 6 and IE 1-IE 8)***

A SAFT test sample was made for each composition - see Test Methods section above. Each first composition was cured using one of three curing profiles, in air or in an air circulating oven, as follows: a) cure at 22°C, 50% RH, for 1, 3, 5 or 7 days, b) cure at 35°C, 85% RH, for 1, 2, 3, 4 or 7 days, or c) cure at 85°C, 85% RH, for 7 days. The cohesion of each crosslinked composition was determining using the SAFT test. Results are shown in Table 4. For the above curing profiles, an oven temperature is represented at 35°C and 85°C; however, the test sample quickly equilibrated to the oven temperature in less than 10 minutes. Also, the temperature of 22°C was that of the air temperature in a controlled lab environment. The %RH in the oven was controlled by a built-in humidity monitoring device, and the %RH at 22°C was also controlled by a similar device.

Table 2: First Compositions

| | | CE 1 control | CE 2 | CE 3 | CE 4 | CE 5 | CE 6 control | CE 7 control | IE 1 | IE 2 | IE 3 | IE 4 | IE 5 | IE 6 | IE 7 | IE 8 |
|---|---|---|---|---|---|---|---|---|---|---|---|---|---|---|---|---|
| AFFINITY GA 1000R Acid (1.2 wt%)[A] | | | | | | 70.00 | | | | | | | | | | |
| AFFINITY GA 1000R Anhydride (1.2 wt%)[A] | | 70.00 | 70.00 | 70.00 | 70.00 | | | | 70.00 | 70.00 | 70.00 | 70.00 | | 70.00 | 70.00 | |
| AFFINITY GA 1000R Anhydride (2.0 wt%)[A] | | | | | | | 70.00 | | | | | | 70.00 | | | |
| FUSABOND P353 Anhydride | | | | | | | | 70.00 | | | | | | | | 70.00 |
| Tackifier (ESCORES 5400) | | 30.00 | 30.00 | 30.00 | 30.00 | 30.00 | 30.00 | 30.00 | 30.00 | 30.00 | 30.00 | 30.00 | 30.00 | 30.00 | 30.00 | 30.00 |
| IRGANOX 1010 | | 0.50 | 0.50 | 0.50 | 0.50 | 0.50 | 0.50 | 0.50 | 0.50 | 0.50 | 0.50 | 0.50 | 0.50 | 0.50 | 0.50 | 0.50 |
| 2-(3,4-Epoxycyclohexyl)-ethyltriethoxysilane | | | | | | | | | 2.44 | | | | | | 3.91 | 1.63 |
| 3-Glycidyloxypropyltriethoxy-silane | | | | | | 2.36 | | | | 2.36 | | | | | | |
| 2-(3,4-Epoxycyclohexyl)ethyl-trimethoxy-silane | | | | | | | | | | | 2.09 | 1.04 | 1.25 | | | |
| 3-Glycidyloxypropyl-trimethoxysilane | | | | | | | | | | | | | | 2.00 | | |
| N-[3-(Trimethoxysilyl)propyl]-butan-1-amine | | | 0.51 | | | | | | | | | | | | | |
| 3-Aminopropyltriethoxysilane | | | | 0.22 | | | | | | | | | | | | |
| 3-Aminopropyldiethoxy-methylsilane | | | | | 0.27 | | | | | | | | | | | |
| Calculation | Mole of MAH[B] | 0.0085 | 0.0085 | 0.0085 | 0.0085 | 0.0085 | 0.0141 | 0.0113 | 0.0085 | 0.0085 | 0.0085 | 0.0085 | 0.0141 | 0.0085 | 0.0085 | 0.0113 |
| | Mole of XL[C] | 0.0000 | 0.0022 | 0.0010 | 0.0014 | 0.0085 | 0.0000 | 0.0000 | 0.0085 | 0.0085 | 0.0085 | 0.0042 | 0.0051 | 0.0085 | 0.0136 | 0.0057 |
| | Mole ratio of XL/MAH | 0.00 | 0.26 | 0.12 | 0.17 | 1.00 | 0.00 | 0.00 | 1.00 | 1.00 | 1.00 | 0.50 | 0.36 | 1.00 | 1.60 | 0.50 |

A) The wt% of anhydride or acid can be determined by an acid-base titration. For example, see titration method described in I. Rahayu, *Maleic Anhydride Grafted onto High Density Polyethylene with an Enhanced Grafting Degree via Monomer Microencapsulation*, Heliyon, 6, 2020, 1-6.

B) MAH = maleic anhydride (grafted).

C) XL = the crosslinker (epoxy-silane or amino-silane).

Table 3: Thermal Stability of First Composition

| | t | CE 1 | CE 2 | CE 3 | CE 4 | CE 5 | CE 6 | CE 7 | IE 1 | IE 2 | IE 3 | IE 4 | IE 5 | IE 6 | IE 7 | IE 8 |
|---|---|---|---|---|---|---|---|---|---|---|---|---|---|---|---|---|
| Viscosity mPa·s/120°C (%Δη(t)) | 1 hr | 41,571 | Gel | Gel | Gel | Gel | 76,684 | | 43,671 | - | 55,888 | 51,589 | - | - | 38,032 | |
| | 2 hrs | 41,645 | - | - | - | - | 76,384 | | 46,250 (5.91%) | - | 63,286 (13.2%) | 54,788 (6.20%) | - | - | 40,071 (5.36%) | |
| | 3 hrs | 40,451 | - | - | - | - | 76,084 | | 50,789 (16.3%) | - | 68,785 (23.1%) | 59,587 (15.5%) | - | - | 42,651 (12.1%) | |
| | 4 hrs | 40,235 | - | - | - | - | 75,899 | | 53,189 (21.8%) | - | 75,484 (35.1%) | 63,087 (22.3%) | - | - | 44,391 (16.7%) | |
| Viscosity mPa·s /150°C (%Δη(t)) | 30 mins | 13,517 | - | - | - | - | 22,465 | | - | - | - | - | - | - | - | |
| | 1 hr | - | - | - | - | - | - | 35,827 | - | - | - | - | 31,893 | - | - | 38,932 |
| | 2 hrs | - | - | - | - | - | - | 36,112 | - | - | - | - | - | - | - | 41,031 (5.4%) |
| | 3 hrs | - | - | - | - | - | - | 36,532 | - | - | - | - | - | - | - | 43,911 (12.8%) |
| | 4 hrs | - | - | - | - | - | - | 37,312 | - | - | - | - | - | - | - | 46,310 (19.0%) |
| Viscosity mPa·s /177°C (%Δη(t)) | 1 hr | 5,969 | - | - | - | - | - | | 7,333 | 5,819 | 7,478 | - | - | 6,869 | - | |
| | 2 hrs | - | - | - | - | - | - | | 8,638 (17.8%) | 6,409 (9.32%) | 9,508 (27.1%) | - | - | 8,158 (18.8%) | - | |
| | 3 hrs | - | - | - | - | - | - | | 11,188 (52.6%) | 6,939 (19.2%) | 12,612 (68.7%) | - | - | 10,300 (49.9%) | - | |

Gel – viscosity approached infinity. No viscosity stability.

Table 4: Adhesion Results of Crosslinked Compositions

| | Cure Time | CE 1 | CE 2 | CE 3 | CE 4 | CE 5 | CE 6 | CE 7 | IE 1 | IE 2 | IE 3 | IE 4 | IE 5 | IE 6 | IE 7 | IE 8 |
|---|---|---|---|---|---|---|---|---|---|---|---|---|---|---|---|---|
| SAFT °C 22°C/50%RH | 1 day | - | - | - | - | - | - | - | - | - | - | 79.0 | - | - | - | - |
| | 3 days | - | - | - | - | - | - | - | 83.3 | - | 116.5 | - | 91.3 | - | - | 154.3 |
| | 5 days | - | - | - | - | - | - | - | 85.4 | - | 117.1 | 91.3 | - | - | - | 156.5 |
| | 7 days | 72.9 | - | - | - | - | 83.4 | 151.0- | 107.1 | 82.2 | 124.2 | 101.5 | 119.3 | 81.8 | 87.4 | - |
| SAFT °C 35°C/85%RH | 1 day | - | - | - | - | - | - | - | 93.8 | 82.4 | 102.5 | - | - | 78.6 | - | - |
| | 2 days | - | - | - | - | - | - | - | 115.8 | - | 136.2 | - | - | - | - | - |
| | 3 days | - | - | - | - | - | - | - | 135.4 | - | - | - | - | - | >170 | - |
| | 4 days | - | - | - | - | - | - | - | - | 100.5 | 138.6 | - | - | 95.7 | - | 163.6 |
| | 7 days | 72.9 | - | - | - | - | 83.4 | 151.0 | - | 109.6 | - | 106.2 | 121.9 | 99.8 | - | - |
| SAFT °C 85°C/85%RH | 7 days | 72.9 | - | - | - | - | 83.4 | 151.0 | >170 | 158.6 | >170 | 127.9 | 131.6 | 150.9 | >170 | >170 |

***Summary of Results - Study 2***

As seen in Table 3, the first compositions of the inventive examples (IE 1 - IE 4 and IE 6 - IE 8) had excellent thermal stability. For example, after 4 hours at 120°C, the increase melt viscosity was less than 36% (IE 1, IE 3, IE 4 and IE 7). After 3 hours at 177°C, the increase in melt viscosity was less than 69% (IE 1 - IE 3 and IE 6). The comparative examples (CE 2-CE 4), each containing an amino-silane, on the other hand, gelled (crosslinked) upon preparation. This result is unexpected since these comparative compositions contained a significantly lower molar ratios of the crosslinker to anhydride groups, as compared to the inventive compositions, and one would expect a lower degree of crosslinking in the comparative compositions (see Table 2). The comparative composition containing the "acid copolymer" (CE 5)

also gelled upon preparation.

In regard to the adhesion results, the inventive examples had significantly higher SAFT values than the respective comparative controls, as seen in Table 4. For example, after curing for 7 days at 22°C and 50% RH, the inventive examples (IE 1 - IE 4, IE 6 and IE 7) had SAFT values from about 82°C to about 124°C, while the comparative control (CE 1) had a SAFT value of about 73°C. After curing for 7 days at 35°C and 85% RH, the inventive examples (IE 2, IE 4 and IE 6) had SAFT values from about 100°C to about 110°C, while the comparative control (CE 1) had a SAFT value of about 73°C. After curing for 7 days at 85°C and 85% RH, the inventive examples (IE 1 - IE 4, IE 6 and IE 7) had SAFT values from about 128°C to > 170°C, while the comparative control (CE 1) had a value of about 73°C.

After a "7 day cure" at 22°C and 50% RH, the inventive example IE 5 had a SAFT value of about 119°C, while the comparative control (CE 6) had a SAFT value of about 83°C. After curing for 7 days at 35°C and 85% RH, example IE 5 had a SAFT value of 122°C, while the comparative control (CE 6) had a SAFT value of about 83°C. After a "7 day cure" at 85°C and 85% RH, example IE 5 had a SAFT value of about 132°C, while the comparative control (CE 6) had a SAFT value of about 83°C. Inventive example IE 8 had high SAFT values (≥ 154°C), as seen in Table 4.

As discussed above, it has been discovered that the inventive compositions had excellent high temperature stability and curing performance. The data confirm that anhydride and epoxy-silane do not react to any appreciable extent, during the formation of the physical blend at elevated temperatures. This results in excellent viscosity stability of the first composition at high temperature, to provide for a long term, stable processing window. During the moisture cure, the anhydride will hydrolyze to form the diacid, and one acid group will react with epoxy, and the remaining acid group will catalyze the curing reactions.

The present invention can be described as set out in the following numbered clauses:

1. A process to form a composition comprising a crosslinked olefin-based polymer derived from an "anhydride-functionalized olefin-based polymer," said process comprising at least the following steps A) and B):

A) mixing together at least the following *components a* and *b* to form a first composition:

*a)* the "anhydride-functionalized olefin-based polymer," and
*b)* at least one epoxy-silane compound;

B) exposing the first composition to moisture to form the crosslinked olefin-based polymer.

2. The process of clause 1, wherein the epoxy-silane compound is selected from structures e1) or e2) below:

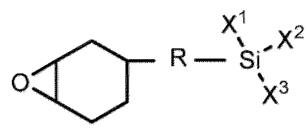
e1),

where R is an alkylene group or a $CH_2O$-alkylene group, X1, X2 and X3 are each independently an alkoxy group or an alkyl group, and at least one of X1, X2 or X3 is an alkoxy group; or

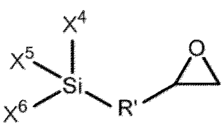
e2),

where R' is an alkylene group or a $CH_2O$-alkylene group, X4, X5 and X6 are each independently an alkoxy group or an alkyl group, and at least one of X4, X5 or X6 is an alkoxy group.

3. The process of clause 1 or clause 2, wherein the first composition, after seven days at 22°C, 50% RH, in air atmosphere, has SAFT value from 70°C to 170°C.

4. The process of any one of clauses 1-3, wherein composition comprises either a crosslinked ethylene-based polymer derived from an anhydride-functionalized ethylene-based polymer, or a crosslinked propylene-based polymer derived from an anhydride-functionalized propylene-based polymer.

5. The process of any one of clauses 1-4, wherein composition comprises a crosslinked ethylene-based polymer derived from an anhydride-functionalized ethylene-based polymer.

6. The process of any one of clauses 1-5, wherein the first composition has a percent increase in melt viscosity at

120°C (%Δη2 at 120°C) from 1.0% to 25%; and where %Δη2 at 120°C = [(η2 - η1)/η1] x 100, and where η2 is the melt viscosity after 2 hours at 120°C, and η1 is the melt viscosity after 1 hour at 120°C.

7. The process of any one of clauses 1-6, wherein, the first composition further comprises a tackifier *(component c)*.

8. A crosslinked composition formed from the process of any one of clauses 1-8.

9. A first composition comprising at least the following *components a* and *b*:

*a)* an "anhydride-functionalized olefin-based polymer;"

*b)* at least one epoxy-silane compound.

10. The composition of clause 9, wherein the epoxy-silane compound is selected from structures e1) or e2) below:

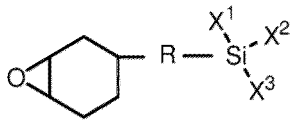 e1),

where R is an alkylene group or a $CH_2O$-alkylene group, X1, X2 and X3 are each independently an alkoxy group or an alkyl group, and at least one of X1, X2 or X3 is an alkoxy group; or

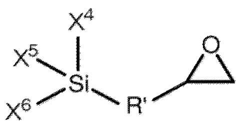 e2),

where R' is an alkylene group or a $CH_2O$-alkylene group, X4, X5 and X6 are each independently an alkoxy group or an alkyl group, and at least one of X4, X5 or X6 is an alkoxy group.

11. The composition of clause 9 or clause 10, wherein the epoxy-silane compound is selected from structures e11), e12), e21), e22), e23), e24), e25), e26), e27) or e28) below:

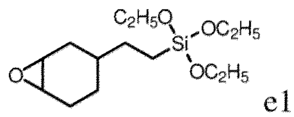 e11), 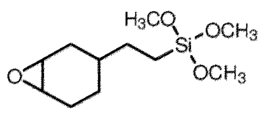 e12), 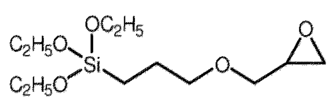 e21),

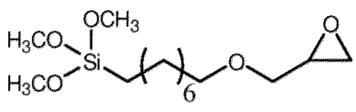 e22), 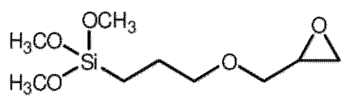 e23),

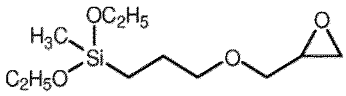 e24), 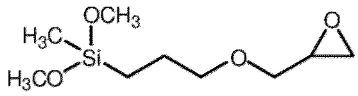 e25),

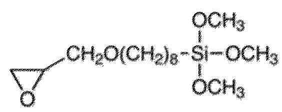 e26), 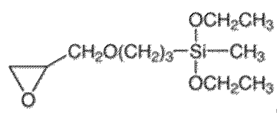 e27), or 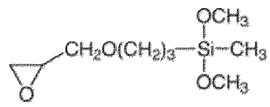 e28).

12. The composition of any one of clauses 9-11, wherein *component a* is an anhydride-functionalized ethylene-based polymer, or an anhydride-functionalized propylene-based polymer.

13. The composition of any one of clauses 9-12, wherein *component a* is an anhydride-functionalized ethylene-based polymer.

14. The composition of any one of clauses 9-13, wherein, the first composition further comprises a tackifier *(component c)*.

15. The composition of any one of clauses 9-14, wherein the first composition has a percent increase in melt viscosity at 120°C (%Δη2 at 120°C) from 1.0% to 25%; and where %Δη2 at 120°C = [(η2 - η1)/η1] x 100, and where η2 is the melt viscosity after 2 hours at 120°C, and η1 is the melt viscosity after 1 hour at 120°C.

16. The composition of any one of clauses 9-15, wherein the first composition has a percent increase in melt viscosity at 177°C (%Δη2 at 177°C) from 10% to 35%; and where %Δη2 at 177°C = [(η2 - η1)/η1] x 100, and where η2 is the melt viscosity after 2 hours at 177°C, and η1 is the melt viscosity after 1 hour at 177°C.

17. The composition of any one of clauses 9-16, wherein, wherein the first composition, after seven days at 22°C, 50% RH, in air atmosphere, has SAFT value from 70°C to 135°C.

18. A crosslinked composition formed from the first composition of any one of clauses 9-17.

19. A crosslinked composition comprising at least one of the following structure CL1, CL2, CL3 or any combination thereof:

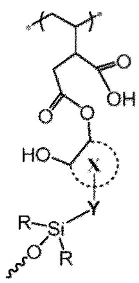 CL1), 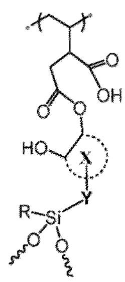 CL2), 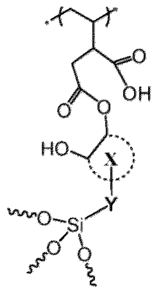 CL3);

and wherein, independently, for each of CL1), CL2), CL3),

each 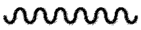 independently represents a portion of another polymer chain of the crosslinked composition; each * independently represents a portion of the remaining polymer chain bonded to the respective -CH2-CHZ- group noted above, where Z is the respective pendant crosslinked site noted above;
X is the remaining portion of a C3 to C8 ring structure, which contains a carbon atom that is bonded to Y, or X is not present, and Y is bonded to the terminal carbon atom of a "-CH(OH)-$CH_2$-O-" bridge; Y is independently a hydrocarbylene group or a heterohydro-carbylene group; each R is independently an OH group, an alkoxy group or an alkyl group.

20. An article comprising at least one component formed from the composition of any one of clauses 8-19.

## Claims

**1.** A crosslinked composition comprising at least one of the following structure CL1, CL2, CL3 or any combination thereof:

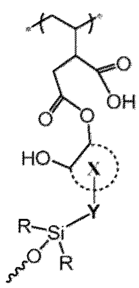 CL1), 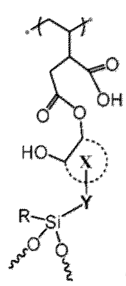 CL2), 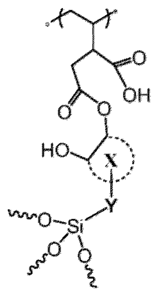 CL3);

and wherein, independently, for each of CL1), CL2), CL3),

each 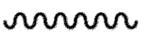 independently represents a portion of another polymer chain of the crosslinked composition; each * independently represents a portion of the remaining polymer chain bonded to the respective -CH2-CHZ- group noted above, where Z is the respective pendant crosslinked site noted above;
X is the remaining portion of a C3 to C8 ring structure, which contains a carbon atom that is bonded to Y, or X

is not present, and Y is bonded to the terminal carbon atom of a "$-CH(OH)-CH_2-O-$" bridge; Y is independently a hydrocarbylene group or a heterohydro-carbylene group; each R is independently an OH group, an alkoxy group or an alkyl group.

**2.** An article comprising at least one component formed from the composition of claim 1.

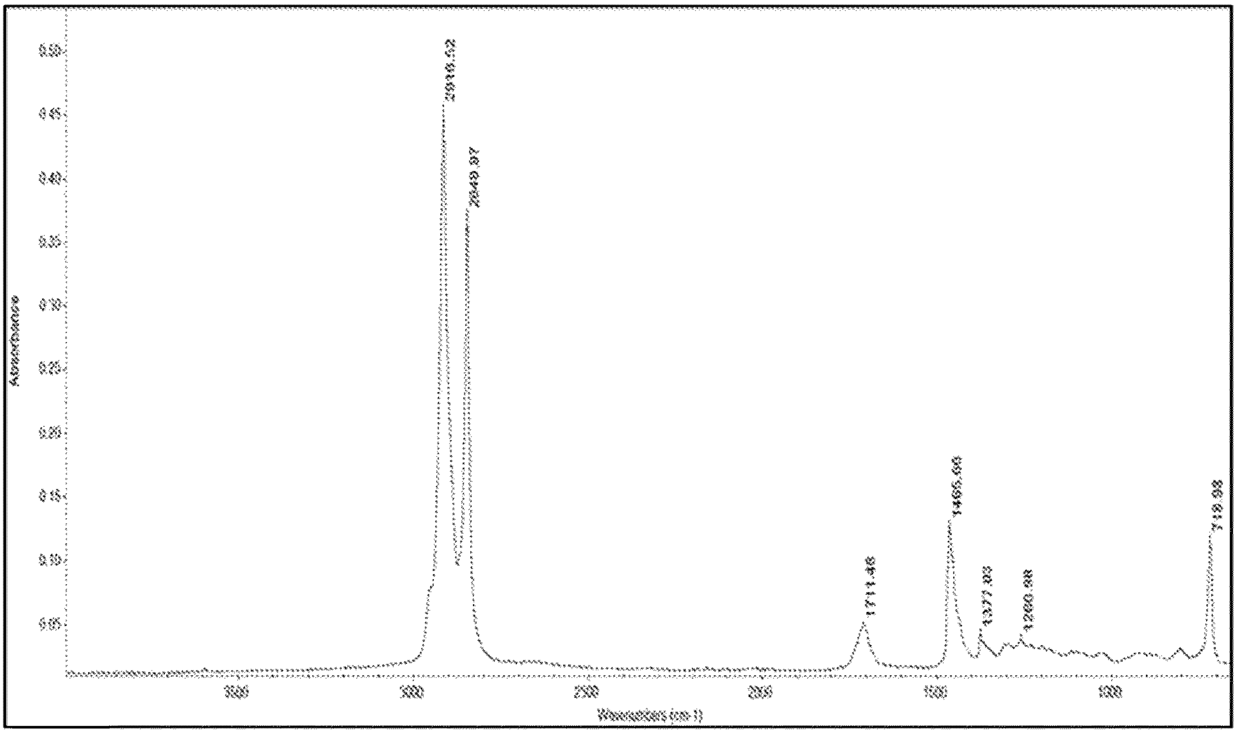


FIGURE 1

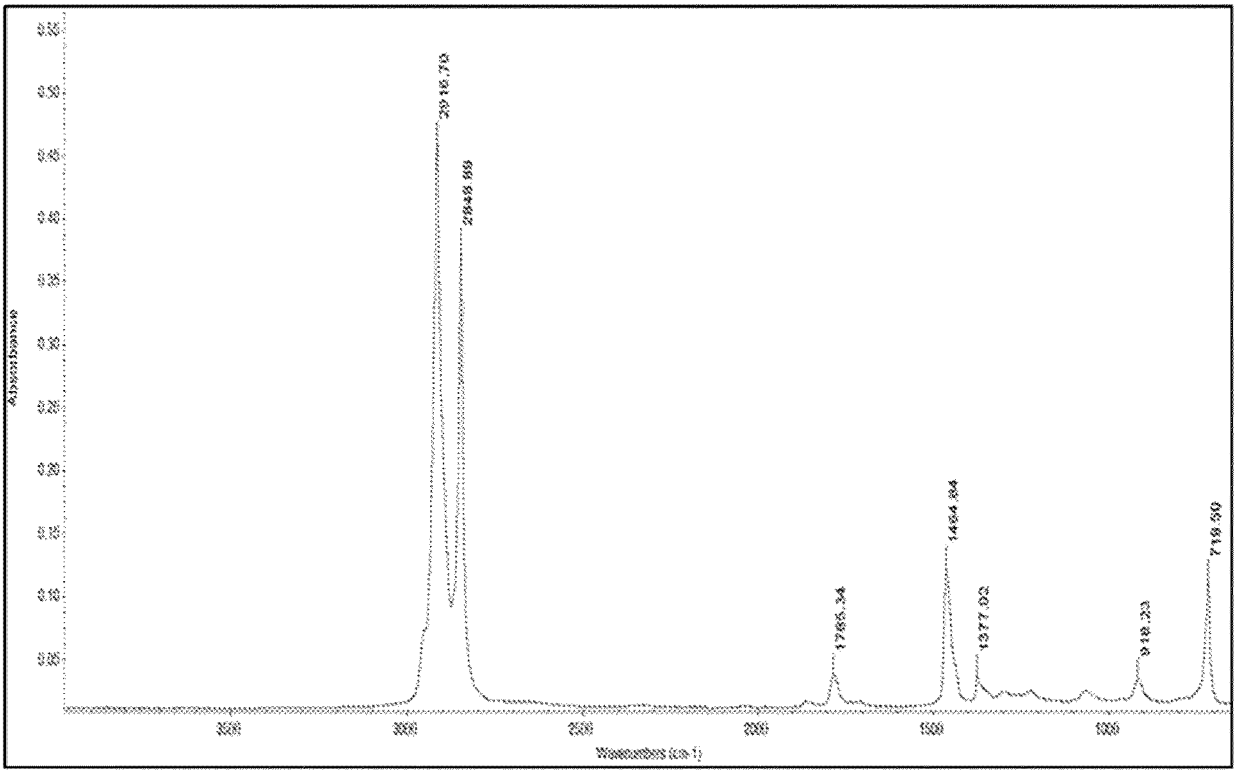


FIGURE 2

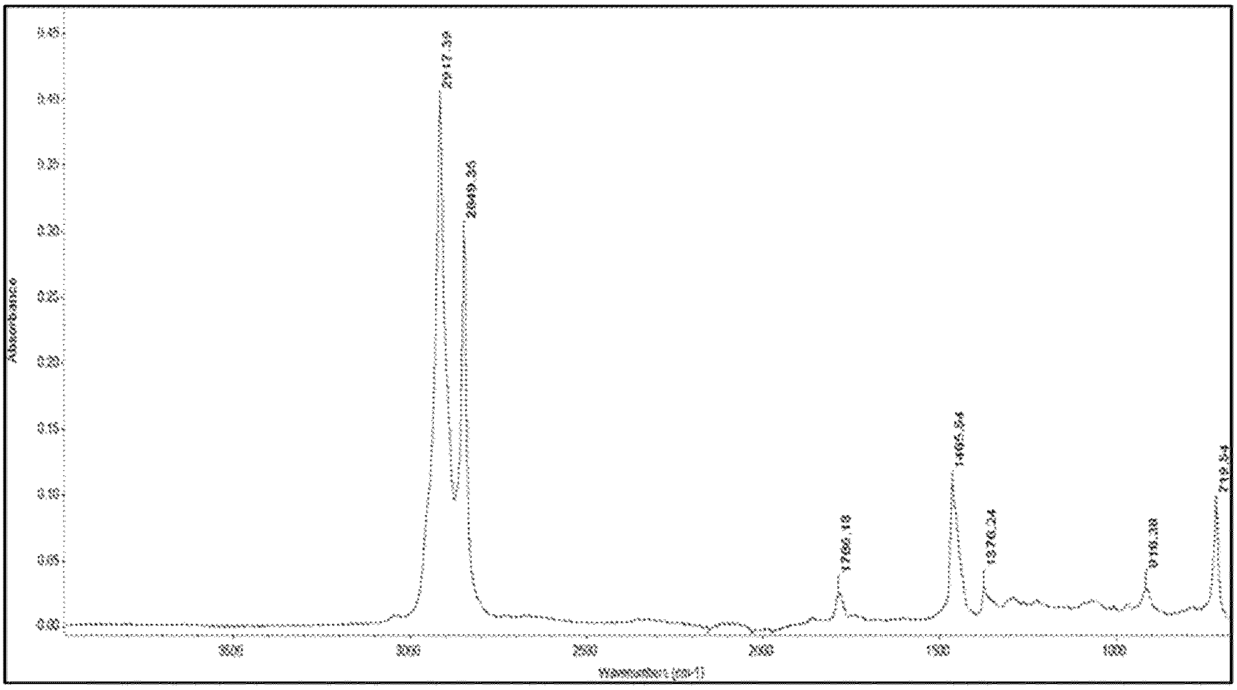


FIGURE 3

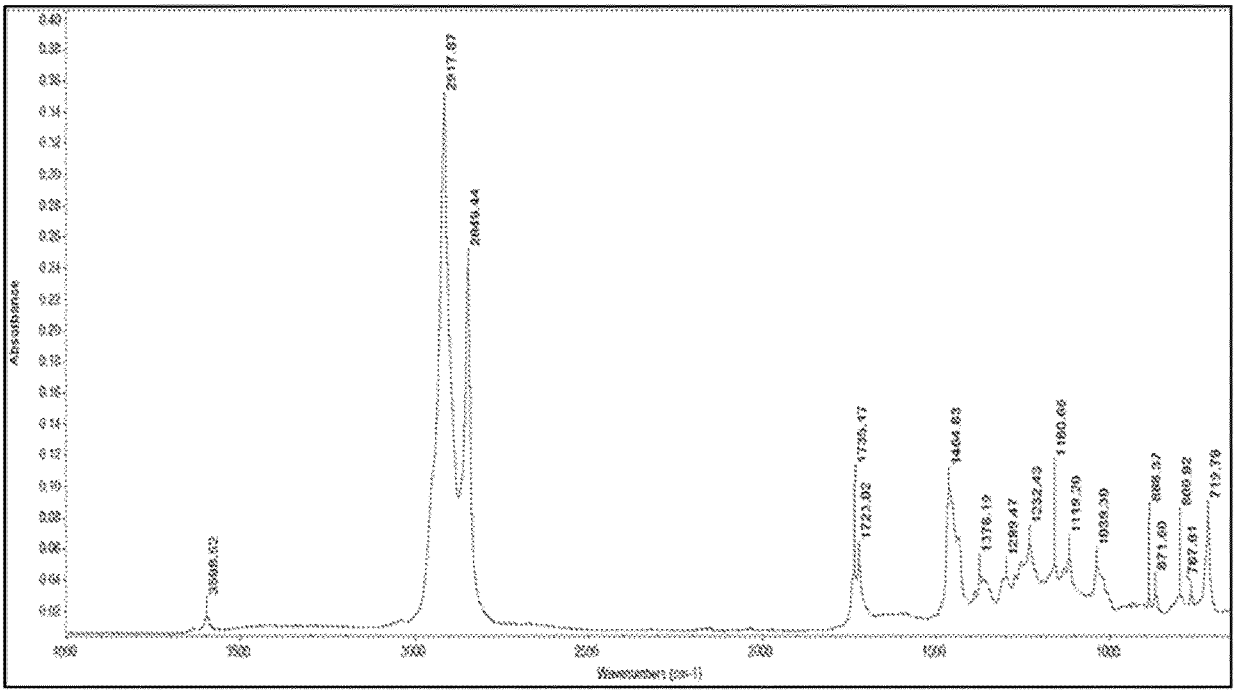


FIGURE 4

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 5210150 A
- US 8399571 B
- US 8569417 B
- US 20200216730 A
- US 7199180 B

### Non-patent literature cited in the description

- *CHEMICAL ABSTRACTS,* 10217-34-2
- *CHEMICAL ABSTRACTS,* 2602-34-8
- *CHEMICAL ABSTRACTS,* 3388-04-3
- *CHEMICAL ABSTRACTS,* 2530-83-8
- *CHEMICAL ABSTRACTS,* 6683-19-8
- *CHEMICAL ABSTRACTS,* 31024-56-3, Mw 235
- *CHEMICAL ABSTRACTS,* 31024-56-3
- *CHEMICAL ABSTRACTS,* 919-30-2
- *CHEMICAL ABSTRACTS,* 3179-76-8